# EUROPEAN PATENT SPECIFICATION

(11) **EP 0 647 575 B1**
(45) Date of publication and mention of the grant of the patent: **07.01.1998**
(21) Application number: 94115888.3
(22) Date of filing: 07.10.1994
(51) Int. Cl.: B65G 1/04, B66F 9/19

(54) **Apparatus for transferring cargoes**
Gerät zum Überführen von Frachten
Appareil pour le transfert de marchandises

(30) Priority: 07.10.1993 JP 251894/93; 07.10.1993 JP 251895/93; 08.10.1993 JP 252642/93
(43) Date of publication of application: 12.04.1995
(73) Proprietor: DAIFUKU CO., LTD., Osaka-shi, Osaka (JP)
(72) Inventor: Goto, Yukihiro, Kenei Gakuden Apartment 8-301, Inuyama-shi, Aichi (JP); Yamada, Yoshihiko, Inuyama-shi, Aichi (JP)
(74) Representative: Füchsle, Klaus, Dipl.-Ing.

(56) References cited:
- DE-A- 3 411 195
- DE-A- 3 917 485
- DE-U- 7 712 339

## Description

### FIELD OF THE INVENTION

The present invention relates to a cargo transfer system for transferring cargoes between shelves and a transporter. Such a cargo transfer system is used to automatically transfer cargoes between a rack or the like and a transporting apparatus such as an automobile truck or a stacker crane which are driven on and along rails and equipped with the apparatus for transferring the cargoes.

### PRIOR ART

In a cargo transfer system known from DE-A-39 17 485 the cargo in the shelves is pulled out towards a bed of a transporter by use of a hook which is a member separate from a pusher used to push the cargo from the transporter to the shelves. The pusher cannot be extended into the shelves because the traverser interconnected with the pusher is restricted on movement towards the shelves.

The transferring apparatuses of the known kind include also those of the so-called running fork type adapted to scoop up the cargoes. The prior art apparatuses further include those of the grasping conveyor type designed to grip each cargo at its opposite sides and pull it out of its rest position. Still another type of the known apparatus is called the hook-and-pull type having a member engaging with a hooked portion of each cargo and pulling it out of its rest position, as mentioned above. In the first mentioned running fork type, there must be provided a lower idle space for a running fork to move along a lower surface of the cargo, in addition to an upper idle space in which the cargo is lifted by the fork. Consequently, a pair of left and right pillows have to be fixed on a bottom plate of each shelf. Further, a prop supporting the pillows must be erected between the adjacent two shelves, thereby noticeably reducing the rack's space actually effective to store of the cargoes.

The transferring apparatuses of the grasping conveyor type and the hook-and-pull type is free from this problem. However, the grasping conveyor type which should comprise a pair of parallel unit conveyors to grip the cargoes, is not employable if the width of cargoes vary beyond tolerable limits. Many mechanisms are used to longitudinally displace and retract the unit conveyors in harmony with each other, to rotate them and to displace them towards and away from each other. Thus, the structure of the transferring apparatuses of this type is extremely complicated and needs much more investment in plant. The hook-and-pull type, which is feasible only if each cargo has the hooked portion, is of a poor versatility.

### SUMMARY OF THE INVENTION

A primary object of the present invention is therefore to provide an apparatus for transferring cargoes, improved to eliminate the drawbacks inherent in the prior art apparatuses. Thus, the invention aims to provide a transferring apparatus such that the storing capacity of a rack and its shelves holding many cargoes side by side is improved, each cargo need not have any hooked portion, and the cargoes of significantly varied widths can be handled and transferred in a reliable manner, though the apparatus can be constructed less expensively.

This object is achieved by a cargo transfer system for transferring cargoes between shelves and a transporter according to claim 1.

The cargo will be transferred from the shelf to the rigid bed, by retracting one of the transfer arms facing the shelf to its upright rest position when the empty traverser is driven into the shelf. Subsequently, the one transfer arm will be laid down before the traverser is retracted to its position beside the rigid bed. The laid transfer arm will thus push and move the cargo onto the rigid bed.

The cargo can be delivered from the rigid bed to a further shelf, by laying down the other transfer arm located remote from the shelf and behind the cargo when the traverser supporting the cargo is driven into the shelf. In such a movement of the traverser, the other transfer arm laid to take its active position pushes and moves the cargo into the shelf.

The transferring apparatus provided herein is effective to raise the storing efficiency of the rack, even if shelves in the rack are arranged side by side and each shelf stores some cargoes. This is because the thin traverser and the upright transfer arm can reciprocate through a narrow gap left between the adjacent cargoes on the shelf. The transfer arm laid behind the cargo to push it towards the shelf or to the rigid bed can operate smoothly, even if the width of cargoes varies to a significant extent. Owing to the simplicity in structure as compared with the prior art apparatuses of the grasping conveyor type, the present apparatus can be manufactured at a lowered cost. Any cargoes devoid of a hooked portion can also be pushed into the shelf or onto the bed, by means of the transfer arm laid down to its active position.

It will be apparent that the transferring apparatus is adapted for incorporation in a transporter movable along the racks. In such a case, the cargoes will be transferred transversely of the row of shelves in each rack, and a narrow gap provided between the adjacent shelves will be enough for the traverser and the transfer arms to operate to push the cargo. It may be preferable to dispose a partition to ensure the gap between said adjacent shelves.

The transfer arms pivoted to the traverser's ends spaced one from another along the transfer path may be controlled such that one arm stands upright when the other is laid down. Alternatively, they may be controlled to stand upright or be laid down in unison with each other so that they can seize the cargo at opposite side portions thereof. In this alternative case, the cargo being transferred will neither rock to take any irregular position nor advance apart from the pushing transfer arm. Thus, the reciprocating speed of the traverser carrying the transfer arms can be raised to improve the efficiency of transfer operation.

Only one traverser with the transfer arms arranged fore and aft for pushing the cargoes may be disposed along one side of the transfer path. Alternatively, two traversers may be equipped along the opposite sides of said transfer path. The cargoes handled in the latter case can be of a width greatly variable within the distance between the traversers. A pair of left and right transfer arms will be laid down to simultaneously take their active position, thus cooperating with each other to act on the cargo at adjacent coplanar portions thereof so as to ensure a smooth transfer.

There may be a case wherein the apparatus cannot be equipped with two traversers each having the pair of transfer arms, due to a restricted amount of invested money or for other reasons. In such a case, a side guide may substitute for one traverser so as to reciprocate in unison therewith. Cargoes of almost the same width can maintain their stable position during transfer, since the side guide cooperates with the traverser to cramp and inhibit the cargo from rocking.

As described above, the transfer arms pushing the cargo out of or into the shelf are swingable an angle of 90 degrees, between their upright rest position and their laid active position. If the traverser carrying the transfer arms would be disposed considerably high in the apparatus, then the arm laid down would act on a cargo's portion located high above its bottom ( that is, above the surface of the rigid bed ). Usually, the cargoes handled in this apparatus are containers made of plastics, so that their higher wall portions are weaker than their lower wall portions. Thus, in a case wherein comparatively heavy wares are packed in the containers, their higher wall portions are likely to be deformed or damaged by the pushing arms.

On the other hand, a position of the driving means for driving the traverser will make it difficult for the traverser to be located sufficiently near the surface of the rigid bed. It may be possible to increase the width of transfer arms such that they can contact the bottom portion of each cargo, when laid down to take their active position. Such broader transfer arms will necessitate a greater gap for allowing the traverser with the raised arm to make free strokes between the adjacent shelves, thus impairing the space efficiency of the rack.

In order to resolve this problem, the second driving means for swinging the transfer arms may be modified such as to swing an angle of more than 90 degrees. In this modification, each arm for pushing the cargoes will take its active position not horizontal but somewhat slanted downwards, when laid down.

An end portion of the arm laid down obliquely will be sufficiently lower than the traverser, even if the latter is equipped at a comparatively high region due to the presence of the driving means. Thus, the traverser can be arranged easier and more naturally, and the transfer arms can contact a lowest possible wall portion of the cargo, thereby protecting the wall from any deformation or breakage. The thin transfer arms will never bulge out of the traverser, when raised upright to advance through the narrow gap, thus affording a higher space efficiency of the rack.

A single mechanism may forcibly shift the position of each transfer arm, from its upright rest position to its laid active position, or vice versa. It is however noted that said mechanism may cause a certain trouble if it fails to raise the laid arm or becomes out of order to thereby permit the upright arm to lie down due to gravitational force. In detail, such an unintentionally laid arm will collapse the cargo or push it out of the shelf which has just received it.

The apparatus provided herein may comprise a countermeasure to avoid such an accident. This measure may desirably be a spring urging the transfer arms towards their upright position. The second driving means for driving the arms in this case will have to force them to their laid position, against the spring which would keep them upright in the event of mechanical trouble in the second driving means. In other words, the spring will help the arms arise for themselves, or prevent them from erroneously lying down, when the driving means is damaged.

The transfer arms are kept upright without failure, unless the driving means forcibly lay them. The arms will neither unintentionally lie down to damage the cargo nor erroneously moves the cargo immediately after accommodation into the shelf. The driving means in this case does not suffer any resistance of spring when it raises the arm. Thus, it can be of a simpler structure constructible more inexpensively as compared with a hypothetical driving means which always suffers resistance against its raising and laying of the arms.

The second driving means for the transfer arms may be electric motors or other rotary actuators installed in the traverser and directly raising and laying the arms. However in a more preferable mode, the driving means is composed of: a wire rope having ends: an rotatable shaft to which the transfer arms are fixed for pivotal movement; a rope end retainer secured to the rotatable shaft and fixedly holding one end of the wire rope; a driving rotor pivoted in and fixed to the rigid bed so as to hold the other end of the wire rope; and guide rings over which the wire rope is spanned between the rope end retainer and the driving rotor, wherein the guide rings are arranged such that a whole path of the wire rope remains unchanged in total length in spite of the traverser's reciprocation.

In the preferable mode summarized above, the torque of the driving rotor is transmitted to the rotatable shaft in opposite directions through the wire rope, the path thereof being variable in three-dimensional configuration thanks to the guide rings. The traverser need not be equipped with any crossing transmission devices such as bevel gears or the like which would be used in a system comprising a chain and sprockets. A lesser number of parts suffice to construct the second driving means, simpler in structure as a whole and effective to render more compact and lighter in weight the traverser carrying the transfer arms. This feature is advantageous in that the transverse width of the traverser and a power for driving it are reduced to lower the construction cost of this apparatus. The traverser can traverse through a narrower vacant space between the adjacent shelves, thus improving the space efficiency thereof in the rack.

Other many advantages and features of the present invention will become apparent from embodiments described below referring to the accompanying drawings.

### BRIEF DESCRIPTION OF THE DRAWINGS

In the drawings illustrating the preferred embodiments of the invention,
Fig. 1 is a plan view of an apparatus for transferring cargoes in a first embodiment, with the apparatus being installed in a transporter and cooperating with racks which are shown in part;
Fig. 2 is a vertical cross section of some principal parts in the apparatus;
Fig. 3A is a side elevation of the apparatus, partly shown in vertical cross section;
Fig. 3B is a plan view of the principal parts in the apparatus;
Fig. 4 is a partial enlargement of Fig. 3A;
Fig. 5 is a schematic side elevation of a first driving means for moving a traverser in the apparatus;
Fig. 6 is a plan view of a mechanism employed in the first driving means so as to drive an intermediate movable rail;
Fig. 7 is a perspective view showing a modification of the first embodiment;
Fig. 8 is a front elevation of another modification of the first embodiment;
Fig. 9 is a plan view of a pair of apparatuses for transferring cargoes in a second embodiment, with the apparatus being installed in the transporter and cooperating with the racks which are shown in part;
Fig. 10 is a vertical cross section of some principal parts in the apparatuses;
Fig. 11 is a combination of side elevations of the apparatuses with a plan view of a second driving means, wherein the side elevations of principal parts of the left and right apparatuses are laid outwardly in opposite directions for convenience of description, and wire ropes are driven by a common actuator;
Fig. 12 is a schematic side elevation of a first driving means for moving a traverser in each apparatus;
Fig. 13 is a plan view of a mechanism employed in the first driving means so as to drive an intermediate movable rail;
Fig. 14 is a schematic side elevation of an apparatus for transferring cargoes in a third embodiment, wherein a shelf in the rack is shown to be served by the apparatus;
Fig. 15 is plan view corresponding to Fig. 14;
Fig. 16 is a rear elevation of transfer arms taking their laid position in the apparatus, with a portion thereof being cut off;
Fig. 17 is a schematic side elevation of a first driving means for moving a traverser in the apparatus;
Fig. 18 is a side elevation of a second driving means for swinging the transfer arms, with the traverser being at its retracted position;
Fig. 19 is also a side elevation of the second driving means, with the traverser being at its intermediate position;
Fig. 20 is another side elevation of the second driving means, with the traverser being at its extended position;
Fig. 21 a rear elevation of the first and second driving means, whose principal portions are shown in vertical cross section;
Fig. 22 is a side elevation of the second driving means installed in the traverser, with a portion of the means being cut off;
Fig. 23 is a front elevation of a further means for urging the transfer arms towards their upright position;
Fig. 24 is a schematic plan view of the apparatus in combination with the transporter;
Fig. 25 is a plan view of a modification of the third embodiment;
Fig. 26 is a plan view of an apparatus for transferring cargoes in a fourth embodiment, wherein the shelf in the rack is shown to be served by the apparatus;
Fig. 27 is a rear elevation of transfer arms taking their laid position in the apparatus, with a portion thereof being cut off;
Fig. 28 is a schematic plan view of the apparatus in combination with the transporter incorporated in an automatic warehouse;
Fig. 29 is a plan view of a modification of the fourth embodiment; and
Fig. 30 is a plan view of another modification of the fourth embodiment.

### DETAILED DESCRIPTION OF THE PREFERRED EMBODIMENTS

### First Embodiment

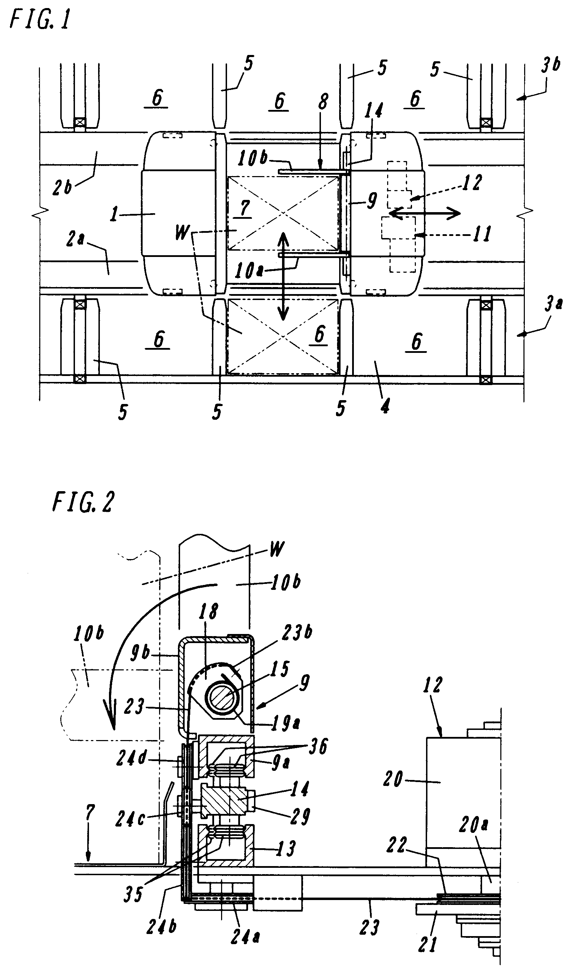

In Fig. 1, the reference numeral 1 denotes a transporter. This transporter is an automobile electric car driven horizontally on and along a pair of left and right guide rails 2a and 2b. The guide rails provide for the electric car a passageway defined between adjacent racks 3a and 3b. Shelves 6 are formed each between adjacent partitions 5 erected on a horizontal plate 4 for supporting cargoes or wares. The transporter 1 has a rigid bed 7 integral therewith and flush with bottoms of the shelves 6, and is equipped with an apparatus 8 for transferring the cargo 'W' from the bed 7 into the shelf 6, or out of the shelf onto the bed.

This apparatus 8 comprises a traverser 9, a pair of transfer arms 10a and 10b, a first driving means 11 for propelling the traverser 9 to reciprocate, and a second driving means 12 for raising and lowering the transfer arms. The traverser 9 reciprocates to be extended and retracted along one transverse side of the rigid bed 7 carried by the transporter 1. Such a reciprocation of the traverser 9 transferring the cargo between the shelf 6 and the bed 7 is perpendicular to a direction in which the transporter 1 travels. The transfer arms 10a and 10b are pivoted on the traverser's forward and rearward ends spaced from each other in the direction of reciprocation.

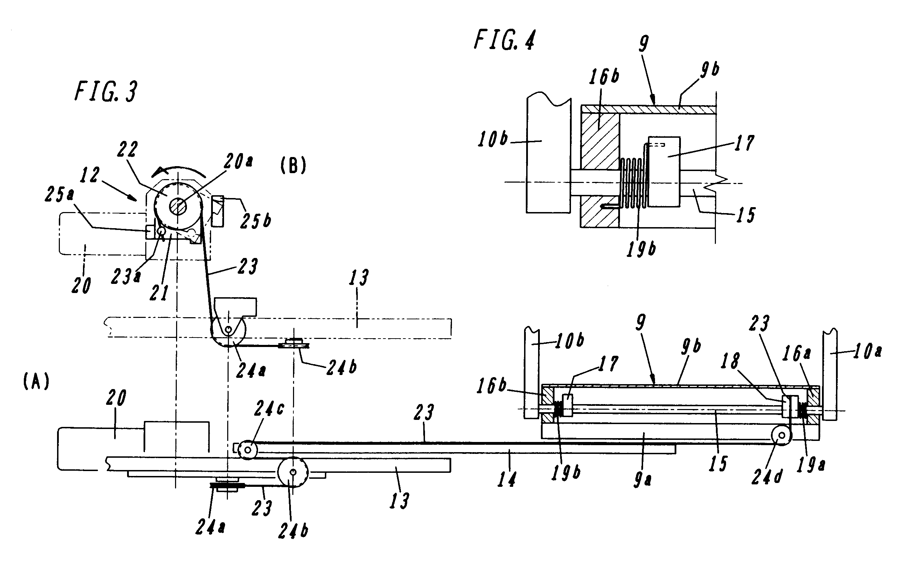

As shown in Figs. 2 and 3, the traverser 9 consisting of a base 9a and a cover 9b is displaceably supported on a movable intermediate rail 14. This rail 14 in turn is supported on a fixed rail 13 also displaceably in a direction in which the cargoes are transferred, to allow the traverser 9 to extend and be retracted in that direction. The traverser for example departing from its home position located beside the bed 7 on the transporter 1 will approach its extended position located in and beside the shelf 6 of the rack 3a or 3b. Such a movement takes place when the traverser 9 and the intermediate rail 14 outwardly move relative to the latter 14 and to the fixed rail 13, respectively. A rotatable shaft 15 penetrates the traverser 9 in a direction in which it reciprocates. Basal portions of the transfer arms 10a and 10b are rigidly fixed to the shaft 15, and bearings 16a and 16b supporting the shaft are disposed at opposite ends of said traverser.

A spring retainer 17 and a rope end retainer 18 are secured to each of end portions of the rotatable shaft 15, as shown in Figs. 3A and 4. Coiled torsion springs 19a and 19b loosely fit on the shaft' end portions located between the retainer 17 and the bearing 16b, and between the other retainer 18 and the other bearing 16a, respectively. Each of the coiled torsion springs 19a and 19b has an end fixed to the bearing 16a or 16b, and another end fixed to the retainer 17 or 18. Thus, those springs always urge the transfer arms 10a and 10b towards their upright position. The second driving means 12 comprises a driving rotor 21 fixed to a vertical output shaft 20a extending from a reducer integral with an electric motor 20. The driving means 12 further comprises a pulley 22 coaxially attached to the output shaft 20a, with the rotor 21 fixed on the pulley, so that a wire 23 is guided around the pulley 22 when wound up or unwound. The wire rope 23 has an end 23a fixed to the rotor 21 and another end 23b ( see Fig. 2 ) fixed to a peripheral portion of the rope end retainer 18. The second driving means 12 still further comprises a first to fourth guide rings 24a - 24d over which the wire rope is spanned between the rope end retainer and the driving rotor.

The wire rope 23 having one end 23a anchored to the driving rotor 21 turns around and extends beyond the pulley 22 to the first guide ring 24a. This ring is rotatably supported by a vertical shaft, which is located at a middle portion between longitudinal ends of the fixed rail 13. The first guide ring 24a deflects the wire rope 23 from its initial path to a succeeding path which runs in parallel with the fixed rail 13. The wire rope then advances to the second guide ring 24b rotatably supported on a horizontal shaft attached to a side wall of the fixed rail 13. The second guide ring 24b guides the wire rope to its backward path, and the third guide ring 24c deflects again the rope from the backward path to its forward elongate path running in parallel with the intermediate movable rail 14. The third guide ring 24c is also rotatably supported on another horizontal shaft attached to a rearward end of said movable rail. The elongate path continues to the fourth guide ring 24d rotatably supported on a further horizontal shaft. This shaft for the fourth guide ring 24d is attached to a forward end of the traverser 9 ( more exactly, its base 9a ). The forward end portion is located most remote from the third guide ring 24c. The fourth guide ring 24d deflects the wire rope upwardly from the elongate path, so that the forward end of rope finally turns an angle around the retainer 18 and is fixed to a peripheral portion thereof. An angular direction in which the rope's end turns around the retainer 18 is such that the backward pulling of said rope rotates the shaft 15 in a direction to forcibly lower the transfer arms 10a and 10b against the torsion springs 19a and 19b.

The arrangement of the shafts rotatably supporting the guide rings 24a - 24d is such that the wire rope always assumes an S-shape as shown in Fig. 3A. Two curves in this S-shape is defined by the second and third guide rings 24b and 24c, in whichever direction the traverser 9 moves accompanied by the intermediate rail 14 ( to the right or to the left in the drawings ). Tension of wire rope 23 may be adjustable if the position of first guide ring 24a is adjustable. The driving rotor 21 is driven forward and backward an angle defined between stoppers 25a and 25b. One stopper 25b will bear against the rotor 21 in order to delimit the winding motion thereof in a forward direction shown with an arrow in Fig. 3B. This stopper 25b may be displaceable around the shaft 20a so that an angle between each of laid down transfer arms (10a and 10b) and a horizontal line is adjustable. Alternatively, an additional stopper for this purpose may be employed. Such an additional stopper may be attached to the spring retainer 17, the rope end retainer 18 or a lug attached to the rotatable shaft 15 in the traverser 9.

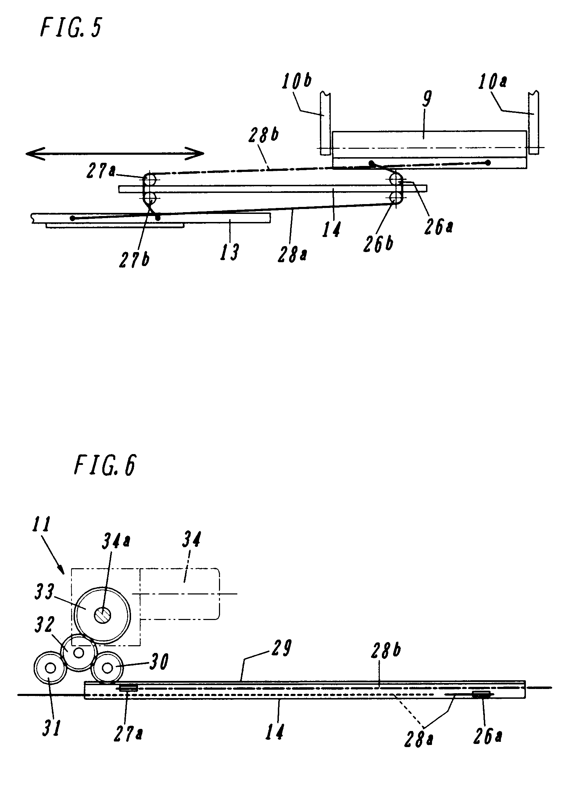

An example of the first driving means 11 for driving the traverser 9 to reciprocatably move is shown in Figs. 5 and 6. A pair of an upper and lower sprockets 26a and 26b are rotatably supported at a forward end of the intermediate movable rail 14. Another pair of rotatably supported sprockets 27a and 27b are also disposed up and down at a rearward end of the movable rail 14. Each of two chains 28a and 28b is attached at one end to the fixed rail 13, and fixed at the other end to the traverser 9. An intermediate portion of one chain 28a turns around one pair of the sprockets 26a and 26b, and an intermediate portion of the other chain 28b similarly turns around the other pair of sprockets 27a and 27b. A rack gear 29 formed in a side wall of the movable rail 14 extends longitudinally thereof. The driving means 11 further comprises: a pair of pinions 30 and 31 of the same diameter and engageable with the rack gear 29; an idle gear 32 always in mesh with both the pinions; and a drive gear 33 in mesh with the idle gear and fixed on a drive shaft 34a. This shaft extends from a reduction box of an electric motor 34.

With the motor 34 being turned on to rotate the drive gear 33, the pinions 30 and 31 will be driven to rotate in the same direction. Those pinions in mesh with the rack gear 29 in the intermediate movable rail 14 will force this rail forwards or backwards ( to the right or to the left in the drawings ). If the traverser 9 has to advance forward, the forward pair of sprockets 26a and 26b engaging with one of the chains 28a ( in Fig. 5 ) will push forwards a middle portion thereof so that the traverser 9 advances in the same direction as the intermediate rail 14. On the other hand, the other chain 28b will pull the traverser 9 backward when the intermediate rail 14 is retracted, thereby retracting the traverser also in the same direction as the rail.

The first driving means 11 for the traverser 9 is basically of the same structure as that known as 'transferring running forks'. Therefore, it will not be detailed any more, except for the following. Only one of the pinions 30 located in front of the other 31 remains engaged with the rack gear 29 in the intermediate rail 14 which has advanced to its foremost position. In Fig. 2, the reference numeral 35 denotes a plurality of circumferentially grooved rollers. The rollers 35 are rotatably supported on vertical shafts depending from the intermediate rail 14, at appropriate intervals longitudinally thereof. Longitudinal lugs respectively protruding inwardly from opposite inner wall surfaces of the fixed rail 13 fit in the respective grooved rollers 35, whereby intermediate rail can move in parallel with and relative to the fixed rail. The further reference numeral 36 denotes a plurality of other circumferentially grooved rollers which are rotatably supported on other vertical shafts protruding upwardly from the intermediate rail 14. Those vertical shafts are also arranged at intervals longitudinally of the intermediate rail. Other longitudinal lugs respectively protruding inwardly from opposite inner wall surfaces of base 9a of the traverser 9 fit in the respective grooved rollers 36, thereby allowing the traverser 9 to be displaced in parallel with and relative to the intermediate rail.

In operation to unload the cargo 'W' from one of the shelves 6 in the warehouse rack 3a or 3b and transfer the cargo onto the rigid bed 7, the transporter 1 will be stopped at first so as to face the shelf. Then, the first driving means 11 will drive the traverser 9 carrying the upright transfer arms 10a and 10b, until the traverser takes its foremost position. The traverser 9 and the transfer arms 10a and 10b, all moving right over the partition 5 in the rack 3a or 3b, will not interfere with any cargoes 'W' in the shelves 6 separated by this partition.

Upon arrival at the foremost position where the traverser 9 is stopped, the second driving means 12 will lay down the transfer arms 10a and 10b which have been upright. In detail, the motor 20 equipped with the reduction gear box shown in Fig. 3 will be actuated to rotate the driving rotor 21. This rotor which has been in contact with one stopper 25a will turn an angle in a forward direction to come into contact with the other stopper 25b. As a result, the wire rope 23 is pulled by the rotor a distance such that the rope end retainer 18 in the traverser 9 causes the rotatable shaft 15 to turn an angle against the coiled springs 19a and 19b, thereby swinging the transfer arms 10a and 10b to be laid down a predetermined angle.

It may be desirable that the arms 10a and 10b are allowed to swing an angle θ ( for example 10° ) in addition to 90 at which they lie horizontal. Free ends of those arms which are laid obliquely downwards will face a wall portion close to a bottom of the cargo 'W'. In this case, the angular position of the stopper 25b will previously be changed in order that the rotor 21 pulls the wire rope 23 an additional distance enabling the arms 10a and 10b to rotate an angle ( 100° , in the illustrated example ) exceeding 90°.

The whole path of wire rope 23 remains unchanged in total length in spite of the movement of the traverser 9 relative to the intermediate rail 14 which also moves in the same direction. Therefore, any change will not occur in tension of the wire rope 23 to turn the rotatable shaft 15, unless the driving rotor 21 is driven to pull the wire rope.

Any way, the transfer arms 10a and 10b will thus be laid down, one in front of and the other in rear of the cargo 'W', which is still on the shelf 6 in the rack 3a or 3b. The first driving means 11 will then retract and cause the traverser 9 to take its home position beside the rigid bed 7 on the transporter 1. One of the transfer arms 10a or 10b in rear of the cargo 'W' will thus push it towards the rigid bed 7 until the cargo is transferred thereto from the shelf 6, which is at same height as the bed.

In operation to unload the cargo 'W' from the bed 7 of the transporter 1 and load the cargo into one of the shelves 6 in the rack 3a or 3b, the transporter carrying the transfer arms 10a and 10b will be stopped at first at a desired position. In this state, one of the arms on the traverser lies in front of and the other in rear of the cargo, similarly to them which are so positioned when the transfer of the cargo onto the rigid bed has just finished. Then, the first driving means 11 will drive the traverser 9 to its foremost position. Thus, the arm 10a or 10b in rear of the cargo will push and smoothly transfer it from the bed 7 of the transporter into the shelf 6 of the rack, since the shelf is located at the same height as the rigid bed. Subsequently, the motor 20 shown in Fig. 3 will be actuated such that the driving rotor 21 is driven in a reverse direction to leave the stopper 25b toward its home position in contact with the other stopper 25a. Synchronously with this reverse motion of the rotor, the wire rope 23 is displaced towards the traverser 9 so that the rotatable shaft 15 therein are turned reversely by the torsion springs 19a and 19b. Due to this reverse rotation of the shaft 15, the wire rope 23 will be taken up by the rope end retainer 18, and at the same time the laid arms 10a and 10b will be raised to take their upright position.

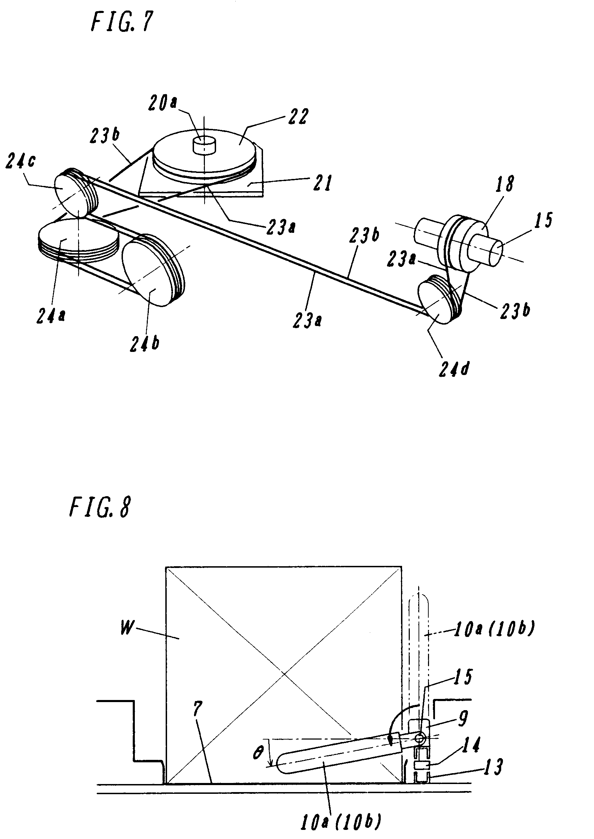

As described above, the coiled torsion springs 19a and 19b employed in this embodiment urge the laid arms 10a and 10b toward their upright position. However, an additional wire rope may substitute for the coiled springs 19a and 19b in a manner shown in Fig. 7. In this modification, one of the wire ropes 23a force the arms 10a and 10b to their laid position when the rotor 21 rotates forwards, with the other rope 23b forcing them to their upright position when said rotor reversely rotates. One ends of the ropes 23a and 23b turn partially around the pulley 22 in opposite directions and are fixed to peripheral portions thereof. The other ends of said ropes also turn partially around the rope end retainer 18 in opposite directions and are fixed to peripheral portions thereof. Each of the guide rings 24a - 24d is of a dual type having two annular grooves. It may also possible to unite the two wire ropes 23a and 23b to form a single endless rope.

### Second Embodiment

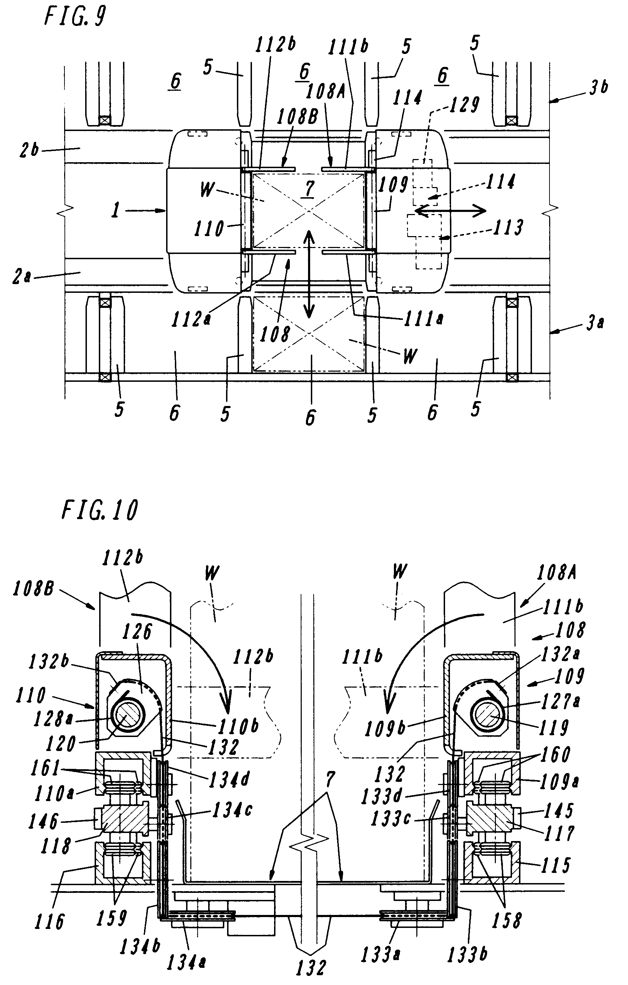

The second embodiment illustrated in Figs. 9 to 13 differs from the first embodiment with respect to their transferring apparatuses. The automobile electric car serving as the transporter 1 as well as the racks 3a and 3b are the same as those in the first embodiment, so that the same reference numerals are allotted to them and no description is repeated regarding them.

A pair of transfer mechanisms 108A and 108B, which are installed in the transporter 1, constitute an integral apparatus of a dual type for transferring cargoes in the second embodiment. The transfer mechanisms extend along the opposite sides of the rigid bed 7, and respectively comprise the traversers 109 and 110 which are extendible and retractable in a direction in which the cargo is transferred. A pair of transfer arms 111a and 111b, or 112a and 112b, are disposed at a forward and rearward ends of each traverser. A first driving means 113 drives the traversers 109 and 111 synchronously in the same direction. A second driving means 114 raises and lays down the transfer arms in harmony.

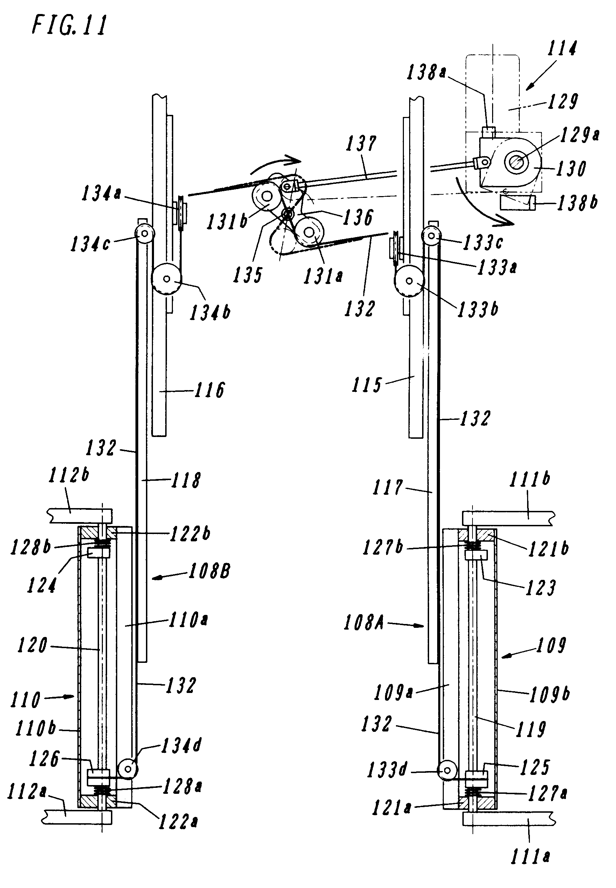

As shown in Figs. 10 and 11, the traversers 109 and 110 each consisting of a base 109a or 110a and a cover 109b or 110b is displaceably supported on movable intermediate rails 117 and 118, respectively. Those rails 117 and 118 in turn are supported respectively on fixed rails 115 and 116 also displaceably in the direction of the cargoes transferred, to allow the traverser 109 and 110 to extend and be retracted in that direction. The traversers for example departing from their home position located beside the bed 7 on the transporter 1 will approach their extended position located in and beside the shelf 6 of the rack 3a or 3b. Such a movement takes place when the traversers 109 and 110 as well as the intermediate rails 117 and 118 outwardly move relative to the latter 117 and 118 and relative to the fixed rails 115 and 116, respectively. Rotatable shafts 119 and 120 penetrate the respective traversers 109 and 110 in a direction in which they reciprocate. Basal portions of the transfer arms 111a and 111b, and those of the transfer arms 112a and 112b are rigidly fixed to the shafts 119 and 120, respectively. Bearings 121a and 121b supporting the shaft 119 are disposed at opposite ends of the traverser 109, with other bearings 122a and 122b supporting the shaft 120 being also disposed at opposite ends of the other traverser 110.

Each of spring retainers 123 and 124 and each of rope end retainers 125 and 126 are secured to each of end portions of each rotatable shaft 119 and 120. Coiled spring 127a and 127b loosely fit on end portions of the shaft 119 located between the retainer 125 and the bearing 121a and between the other retainer 123 and the other bearing 121b, respectively. Further coiled springs 128a and 128b loosely fit on end portions of the other shaft 120 located between the retainer 126 and the bearing 122a, and between the other retainer 124 and the other bearing 122b, respectively. Each of the coiled springs 127a and 127b has an end fixed to the bearing 121a or 121b, and another end fixed to the retainer 125 or 123. Similarly, each of the coiled springs 128a and 128b has an end fixed to the bearing 122a or 122b, and another end fixed to the retainer 126 or 124. Thus, those springs always urge the transfer arms 111a, 111b, 112a and 112b towards their upright position.

The second driving means 114 comprises a driving rotor 130 fixed to a vertical output shaft 129a extending from a reduction box integral with an electric motor 129. The driving means 114 further comprises a couple of pulleys 131a and 131b disposed beneath a central portion of the rigid bed 7, and a single wire rope 132 having ends 132a and 132b ( see Fig. 10 ) remote from each other and respectively attached to peripheral portions of the rope end retainers 125 and 126. The second driving means 114 still further comprises a set of first to fourth guide rings 133a - 133d, and another set of first to fourth guide rings 134a - 134d. The pulleys 131a and 131b are rotatably supported on opposite ends of a member 136 which is pivoted to a vertical shaft 135 so as to be rock in a horizontal plane. A link 137 connects an end portion of the rocking member to an eccentric portion of the driving rotor 130.

The single wire rope 132 has an intermediate portion located between the distal ends 132a and 132b. The intermediate portion engages with the pair of the pulleys 131a and 131b, to thereby assume an S-shape. Halves of the wire rope extend from the intermediate portion to the distal ends 132a and 132b, respectively. Each half of the wire rope 132 turns around the first guide ring 133a or 134a. Those rings are rotatably supported on vertical shaft which are located respectively at middle portions between longitudinal ends of the fixed rail 115 or 116. The first guide rings 133a and 134a deflect the halves of wire rope 132 from their initial paths to succeeding paths which run in parallel with the fixed rails, respectively. The halves of wire rope then advance to the respective second guide rings 133b and 134b, which are rotatably supported on horizontal shafts attached to side walls of each fixed rail 115 and 116. Those second guide rings 133b and 134b guide the wire rope halves to their backward paths, and the third guide rings 133c and 134c deflect again the rope halves from the backward paths to their forward elongate paths running in parallel with the respective intermediate movable rails 117 and 118. The third guide rings 133c and 134c are also rotatably supported on further horizontal shafts attached to rearward ends of said movable rails, respectively. The elongate paths respectively continue to the fourth guide rings 133d and 134d rotatably supported on further horizontal shafts. Those shafts for fourth guide rings 133d and 134d are attached to forward ends of bases 109a and 110a of the respective traversers 109 and 110. The forward end portions are located most remote from the third guide rings 133c and 134c. The fourth guide rings 133d and 134d deflect upwardly the wire rope halves from the elongate paths, so that the forward end of each half of the wire rope finally turns an angle around the retainer 125 or 126, and is fixed to a peripheral portion thereof. The distal end of each half of the wire rope turns around the retainer 125 or 126 in an angular direction. This direction is such that the backward pulling of said halves of the rope causes the shaft 119 or 120 to rotate in a direction to forcibly lay down the transfer arms 111a and 111b, or 112a and 112b, against the springs 127a and 127b, or 128a and 128b, respectively.

The arrangement of the shafts rotatably supporting the guide rings 133a - 134d is such that each half of the wire rope always assumes an S-shape as shown in Fig. 11. Two curves in this S-shape is defined by the second and third guide rings 133b and 133c, or 134b and 134c, in whichever direction the traverser 109 or 110 moves accompanied by the intermediate rail 117 or 118 ( to the right or to the left in the drawings ). The driving rotor 130 is driven forward and backward an angle defined between stoppers 138a and 138b. One stopper 138b will bear against the rotor 130 in order to delimit its turning motion in a forward direction shown with an arrow in Fig. 11. This turning motion of the driving rotor causes the rocking member 136 ( carrying the pulleys 131a and 131b ) to pivot around the shaft 135 so as to increase the tension of the halves of wire rope. The stopper 138b may be displaceable angularly so that an angle between each of laid down transfer arms 111a - 112b and a horizontal line is adjustable. Alternatively, additional stoppers for this purpose may be employed and attached to the spring retainers 123 and 124, to the rope end retainers 125 and 126, or to lugs attached to the rotatable shaft 119 and 120 in the traversers 109 and 110.

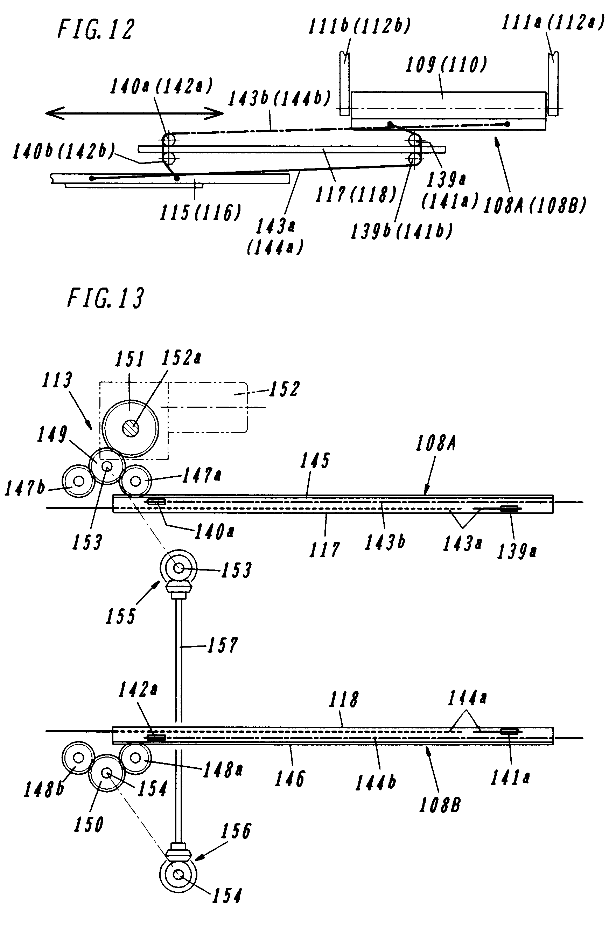

An example of the first driving means 113 for driving the traversers 109 and 110 to move fore and aft is shown in Figs. 12 and 13. A pair of an upper and lower sprockets 139a and 139b are rotatably supported at a forward end of intermediate movable rail 117. Another pair of rotatably supported sprockets 140a and 140b are also disposed up and down at a rearward end of the movable rail 117. Similarly, a pair of an upper and lower sprockets 141a and 141b are rotatably supported at a forward end of the intermediate movable rail 118. Another pair of rotatably supported sprockets 142a and 142b are likewise disposed up and down at a rearward end of the movable rail 118. There are provided two pairs of chains 143a and 143b, and 144a and 144b. Each chain 143a and 143b in one pair is attached at one end to the fixed rail 115, and fixed at the other end to the traverser 109. Each chain 144a and 144b in the other pair is also attached at one end to the other fixed rail 116, and fixed at the other end to the other traverser 110. As shown in Fig. 12, an intermediate portion of one chain 143a ( or 144a ) turns around the forward sprockets 139a and 139b ( or 141a and 141b ), and an intermediate portion of the other chain 143b ( 144b ) similarly turns around the rearward sprockets 140a and 140b ( or 142a and 142b ). Rack gears 145 and 146 respectively formed in side walls of the movable rails 117 and 118 extend longitudinally thereof. The driving means 113 further comprises a pair of pinions 147a and 147b of the same diameter and another pair of pinions 148a and 148b also of the same diameter, wherein those pairs of pinions are engageable with the rack gears 145 and 146, respectively. An idle gear 149 is always in mesh with the one pair of pinions 147a and 147b, with another idle gear 150 being in mesh with the other pair of pinions 148a and 148b. A single drive gear 151 in mesh with only one of the idle gears 149 and fixed on a drive shaft 152a. This shaft extends from a reduction box of an electric motor 152. The idle gears 149 and 150 are respectively fixed on shafts 153 and 154, which are operatively connected by a transmission shaft 157 to each other through two sets of bevel gears 155 and 156. This transmission shaft 157 is disposed beneath the rigid bed 7, together with the rocking member 136 constituting the second driving means 114 for the transfer arms.

With the motor 152 being turned on to rotate the drive gear 151, the pinions 147a and 147b in the transfer mechanism 108A will be driven to rotate in the same direction. The transmission shaft 157 causes the other pinions 148a and 148b to rotate also in the same direction. Those pinions in mesh with the rack gears 145 and 146 in the intermediate movable rails 117 and 118 will force these rails forwards or backwards ( to the right or to the left in the drawings ). Consequently and similarly to the first embodiment, the traversers 109 and 110 will advance in the same direction as the intermediate rails 117 and 118. This applies also to the backward movement of the traversers 109 and 110 accompanied by the intermediate rails 117 and 118 moving backwards.

Only one of the pinions 147a and 148a respectively located in front of the other pinions 147b and 148b remain engaged with the rack gears 145 and 146 in the intermediate rails 117 and 118 which have advanced to their foremost position. In Fig. 10, the reference numerals 158 - 161 denote a plurality of circumferentially grooved rollers similar to those in the first embodiment shown in Fig. 2.

In operation to unload the cargo 'W' from one of the shelves 6 in the warehouse rack 3a or 3b and transfer the cargo onto the rigid bed 7, the transporter 1 will be stopped at first so as to face the shelf. Then, the first driving means 113 will drive the traversers 109 and 110 each carrying the upright transfer arms 111a and 111b in the transfer mechanism 108A, or 112a and 112b in the other transfer mechanism 108B, until the traversers take their foremost position.

Upon arrival at the foremost position where those traversers 109 and 110 are stopped, the second driving means 114 will lay down the transfer arms 111a - 111b which have been upright. In detail, the electric motor 129 equipped with the reduction gear box shown in Fig. 11 will be actuated to rotate the driving rotor 130. This rotor which has been in contact with one stopper 138a will turn an angle in a forward direction to come into contact with the other stopper 138b. Consequently, the link 137 causes the rocking member 136 to pivot an angle around its shaft 135. As a result, the pulleys 131a and 131b will pull a distance the halves of wire rope 132 towards the intermediate portion thereof. The rope end retainers 125 and 126 in the traversers 109 and 110 respectively cause the rotatable shafts 119 and 120 to turn an angle against the springs 127a - 128b, thereby swinging the transfer arms 111a - 112b to be laid down a predetermined angle into the shelf 6.

The whole path of wire rope 132 remains unchanged in total length in spite of the movement of the traversers 109 and 110 relative to the intermediate rails 117 and 118 which also move in the same direction. Therefore, any change will not occur in tension of the wire rope 132 to turn the rotatable shaft 15, unless the driving rotor 130 is driven to pull the wire rope.

Any way, the transfer arms 111a - 112b will thus be laid down, ones 111b and 112b in front of and the others 111a and 112a in rear of the cargo 'W', which is still on the shelf 6 in the rack 3a or 3b. The first driving means 113 will then retract and cause the traverser 109 and 110 to take their home position beside the rigid bed 7 on the transporter 1. The transfer arms 111a and 112a in rear of the cargo 'W' will thus push it towards the rigid bed 7 until the cargo is transferred thereto from the shelf 6, which is at same height as the bed.

In operation to unload the cargo 'W' from the bed 7 of the transporter 1 and load the cargo into one of the shelves 6 in the rack 3a or 3b, the transporter carrying the pairs of transfer arms 111a - 112b in the transfer mechanisms 108A and 108B will be stopped at first at a desired position. In this state, one arms 111a and 112a on the traversers lie in front of and the others 111b and 112b in rear of the cargo, similarly to them which are so positioned when the transfer of the cargo onto the rigid bed has just finished. Then, the first driving means 113 will drive the traversers 109 and 110 to their foremost position. Thus, the arms 111b and 112b in rear of the cargo will push and smoothly transfer it from the bed 7 of the transporter into the shelf 6 of the rack, since the shelf is located at the same height as the rigid bed. Subsequently, the motor 129 shown in Fig. 11 will be actuated so that the driving rotor 130 is driven in a reverse direction to leave the stopper 138b toward its home position in contact with the other stopper 138a. Synchronously with this reverse motion of the rotor, the wire rope 132 having its intermediate portion engaging with the pulleys 131a and 131b are loosened, whereby the rotatable shaft 119 and 120 in the traversers 109 and 110 are turned reversely by the urging pairs of springs 127a - 128b. Due to such a reverse rotation of the shafts 15, the end portions 132a and 132b of wire rope will respectively be taken up by the rope end retainers 125 and 126, and at the same time the laid arms 111a - 112b will be raised to take their upright position.

As described above, the springs 127a - 128b always urge the transfer arms 111a - 112b in one of opposite angular directions so that the single wire rope 132 in the second embodiment has to forcibly displace the arms in the other angular direction against the urging force of the springs. However, the springs may be dispensed with if a pair of wire ropes are employed such that one rope forces the arms to rise upright, with the other rope forcibly laying them down.

### Third Embodiment

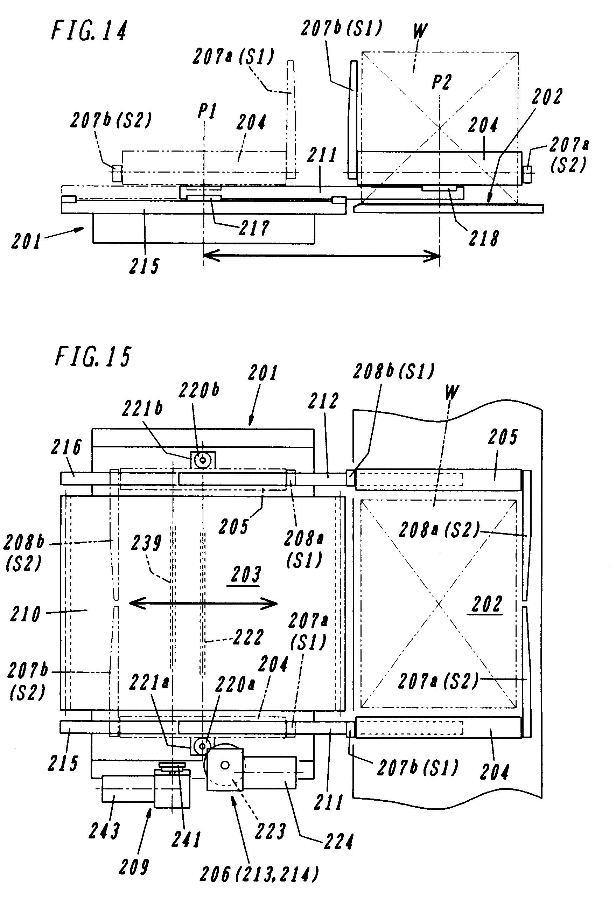

In Figs. 14 to 17 showing the third embodiment, the reference numeral 201 generally denotes an apparatus for transferring cargoes. This apparatus comprises a rigid bed 203 so that cargoes 'W' may be transferred between the bed and a shelf 202, through a horizontal transfer path. The apparatus 201 further comprises traversers 204 and 205 disposed along the left and right sides of the transfer path, and a first driving means 206 for extending and retracting the traversers. A pair of transfer arms 207a and 207b, and another pair of further transfer arms 208a and 208b are also provided, wherein one arms 207a and 208a are pivoted to a forward end of e each traversers 204 and 205, with the other being pivoted to a rearward end thereof. A second driving means 209 drives the arms to rise or lie down in harmony. Similarly to the bed 7 in the first and second embodiments, the bed 203 for slidably supporting the cargoes may be a simple rigid plate fixed to the transporter. Alternatively, the bed 203 may be a conveyor 210 if the cargoes 'W' requires it, as is the case in the illustrated example. The conveyor for positively moving the cargoes may possibly be a belt conveyor, roller conveyor or the like of any suitable type. For example, the belt(s) in the conveyor may be driven to rotate at the same speed as the cargoes, and the rollers in the conveyor may freely rotate about their own axes.

The first driving means 206 is of such a structure that the traversers 204 and 205 reciprocate between their retracted position P1 located beside the bed 203 and their extended position P2 beside the shelf 202. The first driving means 206 in this embodiment is composed of intermediate movable rails 211 and 212, a first driver 213, and a second driver 214. The intermediate rails 211 and 212 are supported by the bed 203 displaceably in a direction in parallel with the transfer path mentioned above, and support and allow the traversers 204 and 205 to be displaced also in parallel with said transfer path. The first driver 213 extends and retracts the intermediate rails 211 and 212 fore and aft in said direction, with the second driver 214 causing the traversers 204 and 205 to be displaced in unison with the intermediate rails and relative thereto.

Details of the first driving means will be described referring to Figs. 14 to 17 and Fig. 21. Sliding guides 217 are disposed on the fixed rails 215 and 216 support the intermediate rails 211 and 212, respectively, movable fore and aft in the transfer direction. Further sliding guides 218 are disposed beneath the traversers 204 and 205, which in turn are disposed above the intermediate rails, respectively support said fixed rails to be also movable fore and aft in the transfer direction mentioned above. The first driver 213 in the first driving means 206 comprises a rack gear 219 formed in a side wall of each of the intermediate rails 211 and 212, and pinions 220a and 220b each in mesh with the corresponding rack gear 219. The first driver further comprises two sets of bevel gears 221a and 221b respectively in mesh with the pinions, a transmission shaft 222 operatively connecting the bevel gear sets one to another, and a drive gear 223 fixed to a shaft extending from a motor 224 having an integral reduction box, wherein the single drive gear is in mesh with one of the pinions 220a.

The second driver 214 in the first driving means 206 comprises a pair of sprockets 255a and 255b respectively supported rotatably on horizontal shafts, which are attached to the outer side wall portions of forward and rearward ends of each intermediate rail 211 and 212. The second driver further comprises chains 226a and 226 each operatively engaging with the sprockets 255a and 255b. One end of each chain is attached to an intermediate portion located between forward and rearward ends of the corresponding fixed rail 215 or 216, whilst the other end of each chain is fixed to an intermediate portion located between forward and rearward ends of the corresponding traverser 204 or 205. A take-up mechanism may be provided for each chain 226a and 226b, if necessary.

The first driving means 206 of the structure as described above will operate as follows. The motor 224 will be turned on to rotate the pinions 220a and 220b so as to displace the intermediate rails 211 and 212 at the same speed and in the same direction. Consequently, the chains 226a and 226b cause the traversers 204 and 205 to move in unison with the intermediate rails, also at the same speed and in the same direction as the latter. If, as a result, the first driver 213 drives each intermediate rail 211 and 212 half a distance between the retracted position P1 and the extended position P2 shown in Fig. 14, then each traversers 204 and 205 will advance the full distance between said two positions P1 and P2, relative to the fixed bed 203. A forward half of each intermediate rail 211 and 212 which has advanced to its foremost position P2 does protrude outwardly of the bed 203. Thus, each traverser 204 and 205 wholly supported on the forward half of the intermediate rail will protrude in its entirety out of the bed 203.

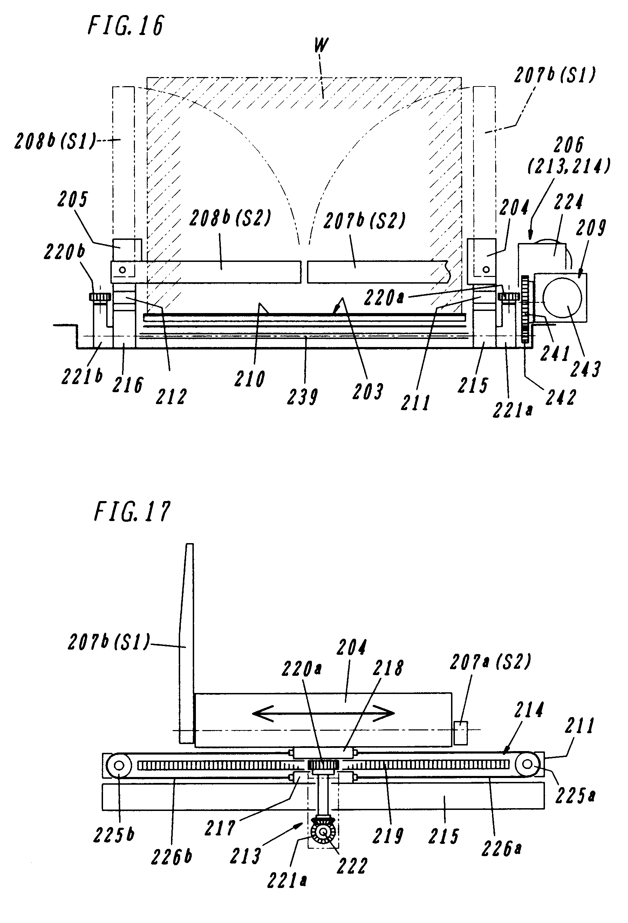

The second driving means 209 drives the transfer arms 207a - 208b to swing between their retracted upright position S1 and their laid active position S2 disposed in the transfer path. As shown in Fig. 15 and Figs. 18 to 22, this driving means 209 comprises a driven member 228 which is supported by a sliding guide 227 and installed in each fixed rail 215 and 216. The driving means further comprises a rocking lever 230 which is pivoted on a horizontal shaft 229 protruding sideways from an intermediate portion located between a forward and rearward ends of each traverser 204 and 205. The rocking lever 230 is swingable fore and aft. The driving means 209 still further comprises: an internal transmission 231 incorporated in each traverser so as to change the rocking motion of the lever 230 into a swinging motion of the transfer arms 207a - 208b; sprockets 232a and 232b; a transmission cable such as a chain 233; and a drive mechanism 234 causing the driven member 228 to move fore and aft. The sprockets 232a and 232b are rotatably supported on horizontal shafts attached to a forward and rearward ends of each of intermediates rail 211 and 212, with the shafts protruding sideways from inner wall portions of said ends. The transmission cable 233 is spanned between the sprockets 232a and 232b, and has ends attached to the driven member 228. An intermediate portion of the transmission 233 is connected to the lever 230, at its end opposite to the shaft 229.

The internal transmission 231 comprises rotatable split shafts 235a and 235b which are incorporated in the traversers 204 and 205. Those split shafts extend as a whole longitudinally of and coaxially with each traversers, and have outer ends to which the transfer arms 207a and 207b, or 208a and 208b, are fixed. Secured fixedly to inner ends of the split shafts 235a and 235b are bevel gears 236a and 236b facing one another. A common bevel gear 237 in mesh with both the bevel gears facing one another is operatively connected by the shaft 229 to the rocking lever 230. Therefore, not only the transfer arms 207a and 207b will swing in opposite angular directions, but also the other transfer arms 208a and 208b will do so. On the other hand, the drive mechanism 234 comprises rack gears 238 each attached to an inner surface of a forward or rearward end of the driven member 228 which is accommodated in the corresponding fixed rail 215 or 216. A pair of pinions 240 fixedly secured to a common transmission shaft 239 are in mesh with the respective rack gears 238. A motor 243 having an integral reduction gear box drives through gears 241 and 242 the common transmission shaft 239.

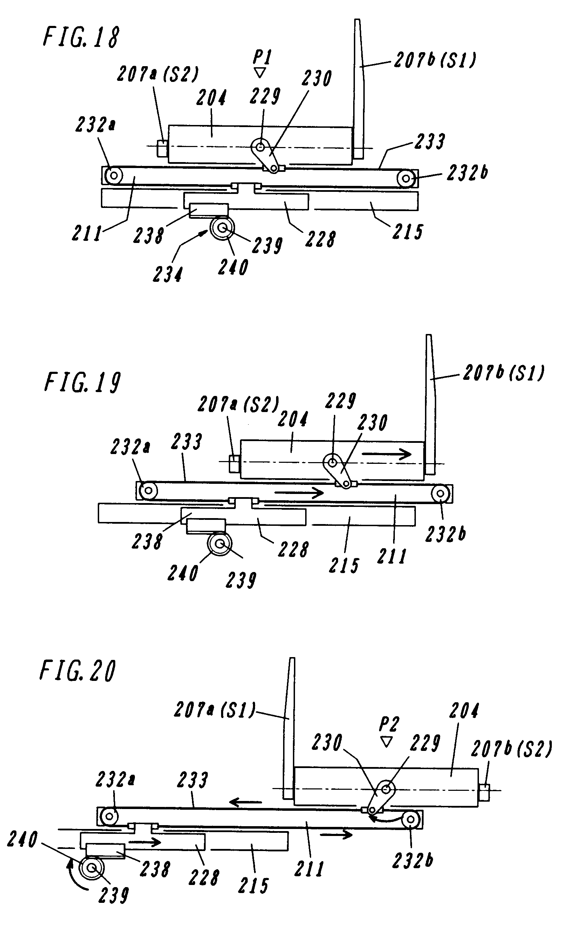

The transmission cable 233 constituting the second driving means 209 will operate in a manner as shown in Figs. 18 and 19, if an appropriate resistance is imparted to the transfer arms 207a - 208b so as to urge them not to swing. As the traversers 204 and 205 are driven fore and aft relative to the intermediate rails 211 and 212, the transmission cable 233 will merely rotate around the sprockets 232a and 232b. The rocking lever 230 will thus not change its position relative to the transmission cable 233. Consequently, any of the transfer arms 207a - 208b which are at their upright position S1 or laid position S2 will not alter their position to the laid position S2 or upright position S1, respectively.

The second driving means 209 will however operate to alter the position of those arms 207a - 208b, if the motor 243 in the driving mechanism 234 is switched on to rotate the pair of pinions 240 connected to the transmission shaft 239. Those pinions in mesh with the rack gears 238 will case a displacement of the driven members 228 relative to the fixed rails 215 and 216, as will be seen in Fig. 20. The transmission cables 233 such as chains consequently turns an angle around the respective intermediate rails 211 and 212, thereby rocking the lever 230 pivoted on each traverser 204 and 205. As a result, the arms 207a and 208a will shift their position in a direction reverse to that in which the other arms 207b and 208b do so. For example, the former arms will be brought down to the laid position S2, with the latter arms being raised to the upright position S1.

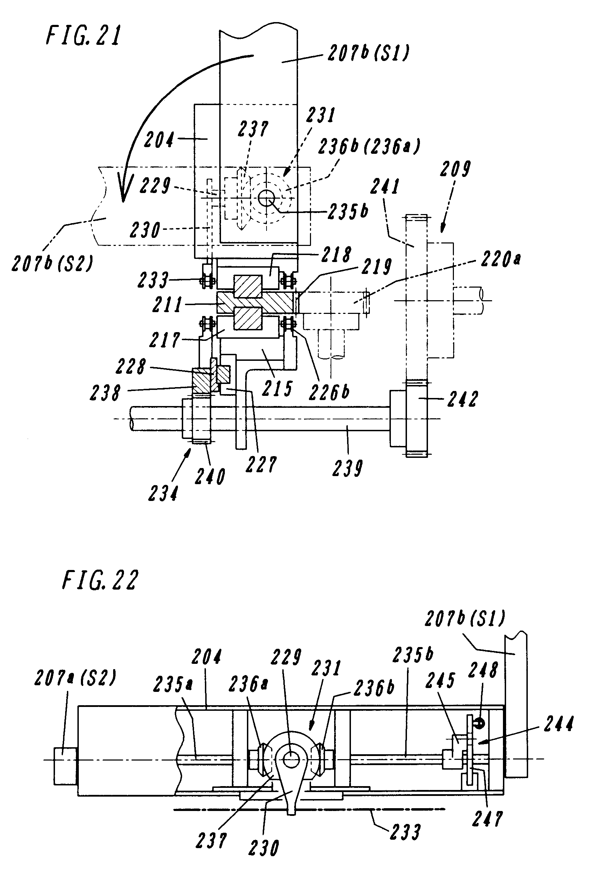

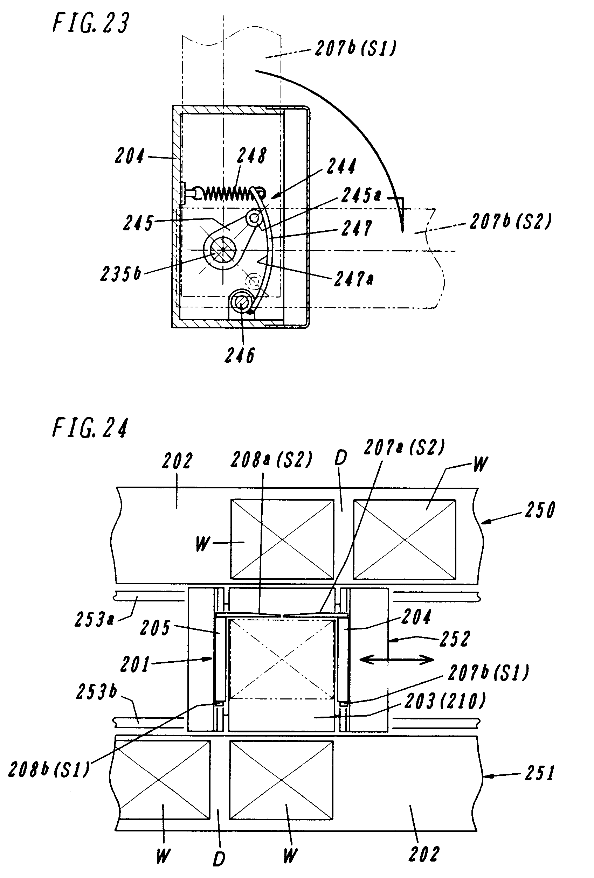

There are provided some stoppers or the like ( not shown ) which delimit the angular displacement between the positions S1 and S2 of said arms to an angle ( e.g., 90° ). A locking means 244 such as shown in Figs. 22 and 23 may be employed to render stable the arms 207a - 208b either at one position S1 or the other S2.

The locking means 244 may be disposed for each split shafts 253 and 235b having outer ends fixed to the transfer arms 207a - 208b, or alternatively only one means 244 for one couple of the split shafts. Fig. 23 shows an example in which the locking means 244 is for the shaft 235b. A cam follower 245 is formed as a lever fixedly attached to the split shaft 235b. A cam 247 has an end pivoted on a shaft 246 which extends within the traverser 204 or 205 and in parallel with the split shaft. A tension spring 248 urges the cam 247 towards the cam follower 245.

An inner surface 247a of the cam 247 is a pressed contact with a roller 245a rotatably fixed to a free end of the lever-shaped follower 245. This follower 245 presses most intensely the cam 247 at a change point, which corresponds to a neutral angle ( e.g., 45° ) between the upright and laid positions S1 and S2 of transfer arms 207a - 208b. At the change point, the cam will be displaced a maximum distance in a direction opposite to that in which the tension spring 248 acts. The more the arms 207a - 208b swing apart from the neutral angle either towards the position S1 or S2, the further displaced is the cam 247 in a reverse direction in which the spring 248 acts. Upon switchover of position caused by the driving means 209, the tension spring 248 will retain the arms 207a - 208b at their new position S1 or S2.

The apparatus 201 of the described structure adapted to transfer cargoes may for example be mounted on a transporter 252 shown in Fig. 24. This transporter is also an automobile electric car, which is movable on a passageway defined between the racks 250 and 251 each providing the shelves 202 to store the cargoes. The position of the apparatus 201 is such that its traversers 204 and 205 reciprocate a horizontal transfer path perpendicular to the passageway, wherein guide rails 253a and 253b guide the transporter 252.

Partitions, which may be useful for the shelves 202 similarly to those employed in the other embodiment shown in Fig. 1 are dispensed with in this embodiment. Instead of those partitions, gaps 'D' are ensured between the adjacent cargoes 'W' which will be arranged side by side and in parallel with the passageway. The traversers 204 and 205 each carrying the transfer arms 207a - 208b at their upright position S1 can freely move through the gaps. Similarly to those in the preceding embodiments, each cargo 'W' is of a length smaller than a distance between the traversers 204 and 205 arranged fore and aft along the passageway, and is of a width smaller than an overall length of each traverser.

In operation to unload the cargo 'W' from the shelf 202, the transporter 252 will be stopped at first at a location just beside the cargo. The transfer arms 207a and 208a (or 207b and 208b) closer to this cargo 'W' are already or subsequently raised to their upright position S1 shown by phantom lines in Fig. 14. Then, the first driving means 206 will drive the traversers 204 and 205 from their retracted position P1 to their extended position P2. At this position P2, the forward and rearward ends of each traverser protrude outwardly from a forward and rearward ends of the cargo 'W', respectively.

Subsequent to the forward movement of the traversers, the second driving means 209 will cause the forward arms 207a and 208a (or 207b and 208b) in rear of the cargo 'W' to swing and take their laid position S2, as shown by rigid lines in Fig. 14. At the same time, the rearward arms 207b and 208b (or 207a and 208a) in front of the cargo 'W' will swing to take their upright position S1. Thereafter, the first driving means 206 will retract the traversers 204 and 205 towards their home position P1. In this manner, the cargo 'W' to be unloaded is pushed by the pair of arms 207a and 208a (or 207b and 208b) in rear of the cargo 'W', until transferred onto the rigid bed 203 ( or conveyor 210 ). As mentioned above, this bed 203 is flush with the shelf 202, so that the cargo can easily be positioned centrally of the bed.

The transporter 252 will subsequently run carrying the cargo 'W' thus received by the bed 203 ( or conveyor 210 ) to any desired destination. At this destination, this cargo will be unloaded from the bed 203, or loaded again into another shelf 202 of the same or different rack 250 or 251. Operations therefor are as follows, whether the cargo is loaded again into the other shelf or simply unloaded. Upon arrival at the destination, the arms 207a and 208a (or 207b and 208b) at their laid position will be raised to their upright position S1, with the other arms 207b and 208b (or 207a and 208a) being swung to take their laid position S2. Subsequently, the traversers 204 and 205 will be driven away from the transporter.

Thus, the latter arms 207b and 208b ( or 207a and 208a) located in rear of the cargo 'W' will push towards the other shelf 202 flush with the bed 203, as the traversers 204 and 205 extend towards their foremost position P2. After completion of such a transfer of the cargo 'W' onto the shelf 202, the traversers will return to their home position P1, without changing the position of any transfer arm.

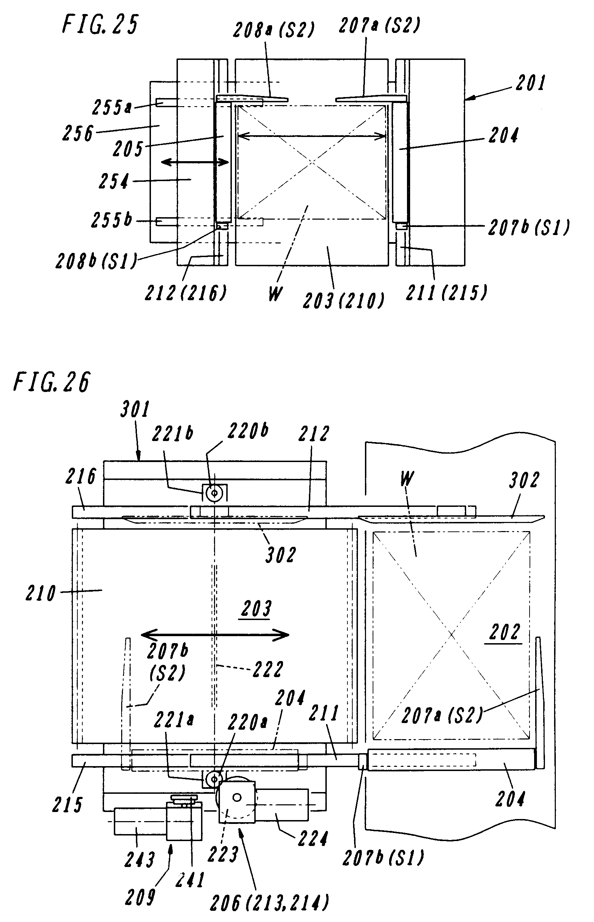

Fig. 25 illustrates a modification of this embodiment, wherein one of the traversers 205 located along one lateral side of the bed 203 is mounted on an appropriate slide plate 254. This plate is displaceable towards or away from the other traverser 204 so that the distance between the traversers 204 and 205 is adjustable within a certain range. It will be apparent that the fixed rail 216 supporting the traverser 205 through the intermediate rail 212 is mounted on the slide plate 254. It will also be understood that this slide plate carrying the traverser 205 and displaced perpendicular to the transfer path must not hinder the traverser and the transfer arms 208a and 208b carried thereby from smoothly moving along said path. An arrangement meeting this requirement may be, in the first driving means 206, a telescopic transmission shaft 222 substituting for the rigid one 222 in the first driver 213. Alternatively, an end of the rigid transmission shaft 222 may be splined to be in an axially sliding engagement with the set of bevel gears 221b rotatably supported by the slide plate. A further arrangement meeting the above requirement may be, in the second driving means 209, a telescopic transmission shaft 239 which takes place of the rigid one. Alternatively, an end of the rigid transmission shaft 239 may be splined to be in an axially sliding engagement with the pinion 238 rotatably supported by the slidable plate. The reference numerals 255a and 255b denote guide rails supporting the slide plate 254 to be displaced perpendicular to the transfer path. Those guide rails are mounted on a fixed plate 256 to which the other traverser 204 is secured.

The position of slide plate 254 may manually be adjusted and subsequently fixed again to match the width of cargoes 'W' which are handled. Instead, a motor-driven and threaded rod may be relied upon to automatically carry out the adjustment. This modification may also apply to the other traverser 204, or to both the traversers 204 and 205 so that they are displaced towards or away from each other in opposite directions perpendicular to the transfer path. In the latter case, a center line of the transfer path remains invariable, only with its width being altered.

In the third embodiment described above, the second driving means 209 is constructed such that one transfer arms 207a and 208a in each pair swing in the direction opposite to that in which the other arms 207b and 208b swing. However, both the arms 207a and 207b ( as well as the arms 208a and 208b ) in each pair may be caused to swing always in the same direction. In detail and for example, one of the bevel gears 236b and one of the split shafts 235b the internal transmission 231 may be dispensed with. In this case, the one of split shafts 235a will extends to take place of the other 235b so that the transfer arms 207a and 207b ( or 208a and 208b ) in each pair may be fixed thereto.

### Fourth Embodiment

An apparatus 301 shown in Figs. 26 to 28 and provided in the fourth embodiment differs from that provided in the third embodiment for transferring cargoes, as follows. Only one of the traversers 204 in the third embodiment has a pair of the transfer arms 207a and 207b, with other traverser 205 is replaced with a side guide 302 peculiar to the fourth embodiment. A first driving means 206 employed herein is the same as that employed in the third embodiment. A second driving means 209 operates only for the pair of transfer arms 207a and 207b to be raised and laid down on the traverser 204. The side guide 302 does not require any mechanism for swinging such further arms 208a and 208b on the other traverser 205 as employed in the third embodiment shown in Figs. 18 to 22. Thus, any transmission shaft such as that 239 in the third embodiment is also dispensed with. The same reference numerals in Figs. 26 to 28 are allotted to members or parts which are the same as or similar to those in the third embodiment, and description thereof is abbreviated.

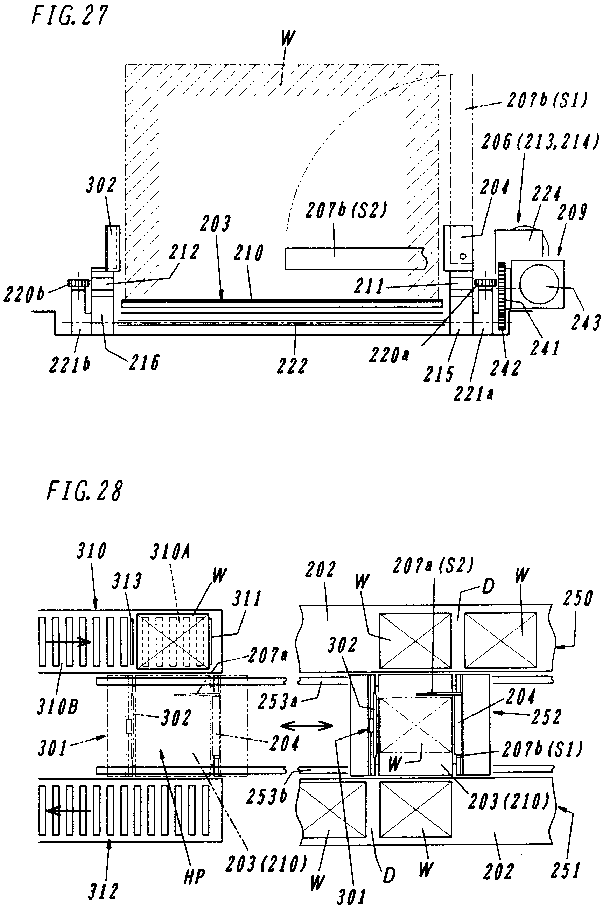

Similarly to that 201 in the second embodiment, the present apparatus 301 for transferring cargoes may for example be mounted on the transporter 252 shown in Fig. 28. This transporter is also an automobile electric car, which is movable on a passageway defined between the racks 250 and 251 each providing the shelves 202 ( see Fig. 26 ) to store the cargoes. The position of the apparatus 301 is such that its traversers 204 and side guide 302 reciprocate a horizontal transfer path perpendicular to the passageway.

A manner of operation and function of the apparatus 301 is basically the same as that in the third embodiment, whether the cargo 'W' is transferred from the shelf 202 of the rack 250 or 251 onto the bed 203 of the transporter 252 ( more exactly, its apparatus 301 ), or reversely from the bed 203 into the shelf 202. However, the cargo 'W' being transferred in the fourth embodiment is sandwiched between the traverser 204 and the side guide 302, when pushed by the transfer arms 207a and 207b pivoted to the traverser.

A storing conveyor 310 shown in Fig. 28 may be used to store the cargo 'W' into an automatic warehouse in which the racks 250 and 251 and the transporter 252 are installed. The cargo 'W' will be transported by the conveyor in parallel with the direction in which the transporter 252 reciprocates. The side guide 302 is located at an upstream portion of the transferring apparatus 301, with the traverser 204 being at a downstream portion thereof, with respect to the cargo advancing on the storing conveyor to enter the warehouse. A terminal stopper 311 may be fixed to a downstream end of the conveyor 310, taking into account the transporter 252 temporarily standing still at its home position 'HP'. Thus, the cargo 'W' which is stopped at a position just beside the transporter 252 resting at the home position 'HP' can have its leading side surface in flush with the inner surface of traverser 204. The transferring apparatus 301 can smoothly move the cargo 'W' on the storing conveyor 310 onto the rigid bed 203 of the transporter 252, in a manner already described above.

The transfer arm 207a can load onto the bed 203 any cargo 'W', unless its width is larger than a distance present between the side guide 302 and the traverser 204.

The reference numeral 312 in Fig. 28 denotes a discharging conveyor. The storing conveyor 310 may be divided into a downstream section 310A and an upstream section 310B. The downstream section is a delivery zone where the terminal stopper stops the cargo 'W' for delivery to the transporter. An additional stopper 313 driven up and down may be interposed between the sections. The cargoes can transfer from the upstream section 310B to the downstream one 310A while the additional stopper 313 is at its retracted position. After the leading cargo 'W' having passed the additional stopper 313 is then stopped by the terminal stopper 311 to stand still on the downstream section 310A, the additional stopper 313 will be raised so that the next cargo and succeeding cargoes stay on the upstream section 310B. The terminal stopper may or may not interfere with the traverser 204. If they interfere with each other, this stopper 311 will be designed to be extendible and retractable. With the stopper 311 being retracted, the downstream section 310A of the conveyor 310 will be switched off to stand still during the transfer of cargo 'W' onto the transporter 252 by means of the transferring apparatus 301.

The downstream section 310A may consist of driven rollers and free rollers arranged perpendicular thereto, with the former rollers being at the same height as the upstream section 310B. The free rollers may be lifted above the driven rollers and into flush with the bed 203 of the transporter 252, upon contact of the cargo with the stopper 311. The free rollers thus facilitating the transfer of cargoes to the transporter will subsequently be lowered. Alternatively, the driven rollers may be lowered so that the free rollers at the same level as the bed 203 support the cargo to be transferred to the bad.

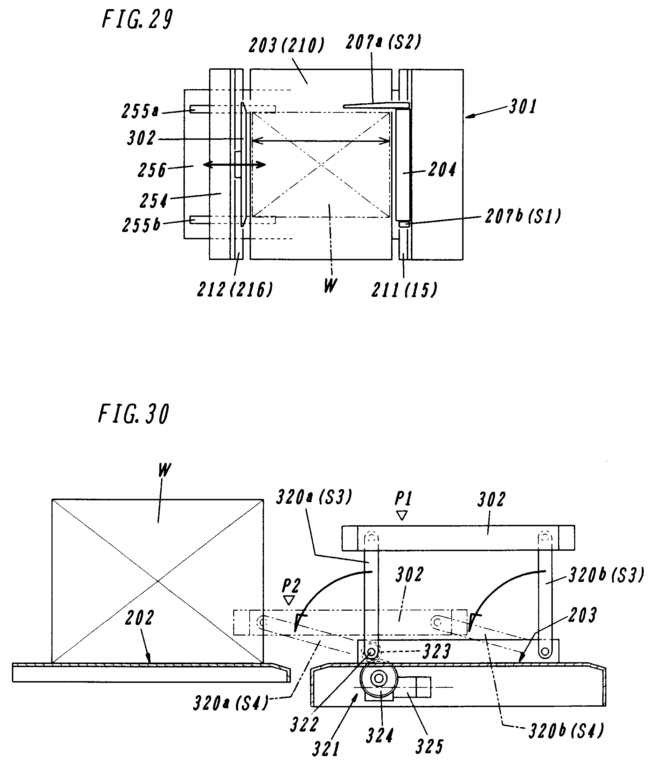

A modification similar to that discussed in the third embodiment and shown in Fig. 25 may also be feasible in the fourth embodiment so that the distance between the side guide 302 and the traverser 204 carrying the pair of arms 207a and 207b can be adjusted. For example, the side guide 302 located along one lateral side of the bed 203 is mounted on an appropriate slide plate 254, in manner shown in Fig. 29. This plate 254 is displaceable towards or away from the traverser 204 so that the distance between them is adjustable within a certain range. The same reference numerals are allotted to members the same as or similar to those in Fig. 25 and description thereof is abbreviated. Contrarily, the slide plate 254 may be incorporated to mount thereon the traverser 204 to be shifted towards or away from the side guide 302. Alternatively, both the traversers 204 and the side guide 205 may be mounted on respective slide plates so that they are simultaneously displaced towards or away from each other in opposite directions.

Fig. 30 shows an alternative example of the driving means for the side guide 302. In this example, parallel links 320a and 320b capable of rocking in a direction in which the cargo is transferred onto and out of the bed are connected to a forward and rearward ends of the side guide. A driver 321 drives the those links to take their upright position S3 and their laid position S4, and may comprise a rotatable shaft 322. A basal portion of one of the links 320a is fixed on the shaft located close to the bed 203. A gear 323 also fixed to the shaft is in mesh with an intermediate gear 324 which is driven by an electric motor 325 having an integral reduction box. The gear 323 may alternatively be driven by the motor 224 equipped in the first driving means 206 for the traversers 204 shown in Fig. 26.

This driving means operates as follows. With the motor 325 in the driver 321 being switched on, the gear 323 rotates to shift the link 320a to its upright position S3 to its laid position S4 indicated by phantom lines. The side guide 302 will thus move from its retracted position P1 above the bed 203 to its extended position P2 in the shelf 202. A reverse motion of the link 320a from its laid position S4 to upright position S3 will raise the side guide 302 reversely to its retracted position P1 from its extended position P2.

The extended position P2 does not necessarily mean a position of the side guide 302 completely accommodated in the shelf. The side guide merely functions to prevent the cargo 'W' from moving obliquely when pushed by the transfer arm 207a or 207b. Therefore, only an end portion of the side guide 302 is placed into the shelf 202 and positioned closely to a side wall of the cargo standing therein, in a manner shown by the phantom lines in Fig. 29. Even such a partial engagement will be enough for the side guide to ensure a normal position of the cargo which is being transferred onto the bed or into the shelf 203.

The side guide 302 may make the described translational motion either synchronously or non-synchronously with the reciprocal motion of the traverser 204 carrying the arms 207a and 207b. In a case wherein the side guide 302 leaving the bed 203 enters the shelf 202 in its entirety to take its extended position P2, it is preferable for the side guide to move in unison with the traverser 204. In another case wherein only the end portion of the side guide faces the cargo's side wall at the extended position P2 shown in Fig. 29, the rearward retraction of side guide 302 out of the shelf 202 may preferably be effected after the retraction of traverser 204 has finished, though the side guide is driven forwards simultaneously with the traverser.

The transferring apparatus provided herein may be mounted on a liftable carriage employed in certain transporters of the so-called 'stacker-crane type', wherein the carriage is lifted and lowered to serve for selected shelves which are arranged up and down. The transferring apparatus in accordance with the present invention is also employable in an elevator immovable horizontally but only ascending and descending for transportation of cargoes, or in a stationary equipment which itself does neither move horizontally nor vertically.

The embodiments described hereinabove may be combined with each other. For example, the transfer arms 10a and 10b, or 111a and 111b, or 112a and 112b in each pair of them in the first or second embodiment may be driven in opposite directions, similarly to those 207a and 207b or 208a and 208b in the third embodiment, or those 207a and 207b in the fourth embodiment. Contrarily, the transfer arms 207a and 207b or 208a and 208b in each pair, or those 207a and 207b in the pair employed in the third or fourth embodiment may be driven always in the same direction, as is the case for the transfer arms 10a and 10b, or 111a and 111b, or 112a and 112b in each pair in the first or second embodiment.

Additionally, each of the transfer arms 111a - 112b and 207a - 208b in the second, third and fourth embodiments may have their free ends lowered below their basal portions when laid to their active position, similarly to those in the first embodiment shown in Fig. 8. The first driving means for the traversers 9, 109, 110, 204, 205 and/or the side guide 302 are not restricted to those as described in the embodiments. Further, the second driving means for the transfer arms may be a motor, a rotary solenoid, an electric actuator of the cylinder type, or a pneumatic or hydraulic cylinder, each installed in the traverser to which the arms are pivoted.

## Claims

1. A cargo transfer system for transferring cargoes between shelves (6) and a transporter (1),
said transporter (1) being capable of moving horizontally along the shelves (6) at a level and having a rigid bed (7) for receiving a cargo transferred on a horizontal transfer path which extends between the bed (7) and the shelves (6) in a direction perpendicular with respect to a moving direction of the transporter (1), the transfer path having a right side and a left side, and the bed (7) having opposite ends facing the shelves (6),
the system comprising:
- a traverser (9) which is disposed along at least one side of the transfer path, having opposite ends in a longitudinal direction, and having a retracted position at the side of the bed (7) and being extendible from its retracted position to its forwarding position inside the shelves (6),
- a first drive (11) for reciprocating the traverser (9) along guide rails (13, 14) provided at the side of the transfer path,
- a pair of transfer arms (10a, 10b) for pushing one side face of the cargo from the back with respect to the transfer direction toward and away from the bed (7), the transfer arms each being pivoted on the opposite ends of the traverser (9) and having a free end shifted between an upright resting position and a lowered active position where the free end projects over the transfer path, and
- a second drive for shifting the free ends of the transfer arms (10a, 10b) between their resting and active positions.

2. A system as defined in claim 1, wherein the second drive (12) is interconnected with both transfer arms (10a, 10b) so that both transfer arms (10a, 10b) can swing together in the same direction and take the same position.

3. A system as defined in claim 1, wherein the second drive (12) is interconnected with both transfer arms (10a, 10b) so that the transfer arms (10a, 10b) can swing in opposite directions with respect to one another and take different positions to one another.

4. A system as defined in any of claims 1 to 3, wherein the second drive (12) is adapted to swing each of the transfer arms at an angle greater than 90°, and the free end of each transfer arm is inclined downwardly with respect to a horizontal plane when shifted to the lowered active position.

5. A system as defined in any of claims 1 to 3, wherein the second drive (12) comprises springs (19a, 19b) for urging each transfer arm (10a, 10b) towards its upright resting position, so that the transfer arms (10a, 10b) are forced to swing to their lowered active position against the bias of the springs (19a, 19b).

6. A system as defined in any of claims 1 to 3, wherein the traversers (109, 110) are disposed along both the right and left sides of the transfer path, the first drive including driving means (113) which are interconnected with the traversers (109, 110) so that the traversers (109, 110) can move together in the same direction, and the second drive including driving means (114) which are interconnected with the arms (111a, 111b; 112a, 112b) so that each of the two arms (111a, 112b) and each of the two arms (111a, 112b), located respectively on one end and on the other end of each of the traversers (109, 110), can be caused to swing in the same direction and take the same position, respectively.

7. A system as defined in claim 6, wherein the second driving means (114) comprises a rotatable shaft (109, 110) incorporated in each of the traversers (109, 110), a wire rope (132) having ends secured to the rotatable shafts (109, 110) and having an intermediate portion passing around guide pulleys (131a, 131b), a motor (129) associated with the guide pulleys (131a, 131b) so as to change the positions of the guide pulleys (131a, 131b), and guide wheels (133a to 133d, 134a to 134d) arranged so that the wire rope (132) is stretched tight irrespective of the extension of the traversers (109, 110), wherein the arms (111a, 111b, 112a, 112b) are caused to swing in the same direction toward their upright resting position or their lowered active position when the position of the guide pulleys (131a, 131b) is changed so that the wire rope is pulled.

8. A system as defined in claim 6, wherein both traversers (109, 110) are so arranged that the interval between both traversers (109, 110) is adjustable.

9. A system as defined in any of claims 1 to 3, wherein the traverser (204) is disposed along one side of the transfer path, a side guide (302) for the cargo transferred being disposed along the other side of the transfer path and having opposite ends in a longitudinal direction, a third driving means (320a, 320b, 321) being provided for reciprocating the side guide (302) for cargo along the transfer path between a retracted position at the side of the bed (7) and an extended position to and into the shelves (6), the side guide (302) for cargo is interconnected with the traverser (204) so as to move together with the traverser (204) in the same direction.

10. A system as defined in claim 9, wherein the traverser (204) and the side guide (302) for cargoes are so arranged that the interval between the traverser (204) and the side guide (302) is adjustable.

11. A system as defined in claim 9 or 10, wherein the third driving means comprises parallel links (320a, 320b) pivoted on the opposite ends of the side guide (302) and having an upright position and a lowered position, and a driver (321) for rocking the links (320a, 320b) between the upright and lowered positions.

12. A system as defined in any of claims 1 to 3, wherein the second driving means (12) comprises a rotatable shaft (15) incorporated in the traverser (9), a rope end retainer (18) secured to the rotatable shaft (15), a driving rotor (21) provided on the side of the bed (7), a wire rope (23) passing through and stretched between the rope end retainer (18) and the driving rotor (21), and guide wheels (24a to 24d) arranged so that the wire rope (23) is stretched tight irrespective of the extension of the traverser (9).

13. A system as defined in claim 12, wherein the second driving means (12) further comprises springs (19a, 19b) for urging each transfer arm (10a, 10b) towards its upright resting position, wherein the arms (10a, 10b) are caused to swing towards their lowered active position when the wire rope (23) is pulled with the rotation of the driving rotor (21).

14. A system as defined in claim 12, wherein the wire rope (23) includes a first rope (23a) for causing the arms (10a, 10b) to swing towards their lowered active position at the time of rotating the driving rotor (21) in one angular direction, and a second rope (23b) for causing the arms (10a, 10b) to swing towards their upright resting position at the time of rotating the driving rotor (21) in the opposite angular direction.

15. A system as defined in any of claims 1 to 3, wherein the first driving means (206) comprises an intermediate rail (211, 212) which is supported indirectly on the side of the bed (203) capable of moving along the transfer path and is adapted to support the traverser (204, 205) capable of moving along the transfer path, a first driver (213) for moving the intermediate rail (211) to and from the shelves (6), a second driver (214) for moving the traverser (204, 205) in the same direction in association with the movement of the intermediate rail (211), wherein the second driving means (209) comprises a driven member (228) supported indirectly on the side of the bed (203) capable of moving along the transfer path, a forward and backward rockable lever (230) pivoted on the traverser (204, 205), an internal transmission (231) for changing the rocking motion of the lever (230) into a swinging motion of the arms (207a, 207b), a transmission cable (233) connected and stretched through opposite ends (232a, 232b) between the driven member (228) and the lever (230), and a drive mechanism (234) for reciprocatably moving the driven member (228).

16. A system as defined in any of claims 1 to 3, wherein a space D is formed between two adjacent sections for storing the cargoes in each of the shelves (6) so that the traverser (9) with the transfer arms (10a, 10b) can enter the shelves (6).

17. A system as defined in claim 16, wherein a separating member (5) is provided between two adjacent sections for storing the cargoes in each of the shelves (6) so as to secure the space D for entrance of the traverser (9) with the transfer arms (10a, 10b) into the shelves (6).

## Patentansprüche

1. Frachtgut-Übertragungssystem zum Übertragen von Frachtgut zwischen Regalen (6) und einer Fördereinrichtung (1),
wobei die Fördereinrichtung (1) sich horizontal entlang der Regale (6) auf einem Niveau bewegen kann und ein festes Bett (7) zur Aufnahme eines Frachtgutes aufweist, das auf einer horizontalen Übertragungsbahn übertragen wird, die sich zwischen dem Bett (7) und den Regalen (6) in einer Richtung senkrecht bezüglich einer Bewegungsrichtung der Fördereinrichtung (1) erstreckt, wobei die Übertragungsbahn eine rechte und eine linke Seite aufweist, und das Bett (7) entgegengesetzte Enden aufweist, die zu den Regalen (6) gerichtet sind,
wobei das System folgendes aufweist:
- eine Schiebebühne (9), die entlang wenigstens einer Seite der Übertragungsbahn angeordnet ist und in einer Längsrichtung entgegengesetzte Enden aufweist und eine zurückgezogene Stellung an der Seite des Bettes (7) aufweist und von seiner zurückgezogenen Stellung zu seiner ausgefahrenen Stellung innerhalb der Regale (6) erstreckbar ist,
- einen ersten Antrieb (11) zum Hin- und Herbewegen der Schiebebühne (9) entlang von Führungsschienen (13, 14), die an der Seite der Übertragungsbahn vorgesehen sind,
- zwei Übertragungsarmen (10a, 10b) zum Schieben einer Seitenfläche des Frachtgutes von der Rückseite bezüglich der Übertragungsrichtung zu dem Bett (7) und von diesem weg, wobei die Übertragungsarme jeweils an entgegengesetzte Enden der Schiebebühne (9) angelenkt sind und ein freies Ende aufweisen, das zwischen einer aufrechten Ruhestellung und einer abgesenkten aktiven Stellung verstellt wird, in der das freie Ende über die Übertragungsbahn vorsteht, und
- einen zweiten Antrieb zum Verstellen der freien Enden der Ubertragungsarme (10a, 10b) zwischen ihren Ruhe- und aktiven Stellungen.

2. System nach Anspruch 1, wobei der zweite Antrieb (12) mit beiden Übertragungsarmen (10a, 10b) derart verbunden ist, daß die Übertragungsarme (10a, 10b) miteinander in der gleichen Richtung verschwenken und die gleiche Stellung einnehmen können.

3. System nach Anspruch 1, wobei der zweite Antrieb (12) mit beiden Übertragungsarmen (10a, 10b) derart verbunden ist, daß die Übertragungsarme (10a, 10b) in entgegengesetzten Richtungen bezüglich einander schwenken können und voneinander unterschiedliche Stellungen annehmen können.

4. System nach einem der Ansprüche 1 bis 3, wobei der zweite Antrieb (12) derart ausgebildet ist, daß er einen jeden der Übertragungsarme um einen Winkel größer als 90° schwenken kann, und wobei das freie Ende eines jeden Übertragungsarmes bezüglich einer horizontalen Ebene nach unten geneigt ist, wenn es zu der abgesenkten aktiven Stellung verstellt ist.

5. System nach einem der Ansprüche 1 bis 3, wobei der zweite Antrieb (12) Federn (19a, 19b) zum Zwingen eines jeden Übertragungsarmes (10a, 10b) in Richtung seiner aufrechten Ruhestellung aufweist, so daß die Übertragungsarme (10a, 10b) gezwungen werden, gegen die Vorspannung der Federn (19a, 19b) in ihre abgesenkte aktive Stellung zu schwenken.

6. System nach einem der Ansprüche 1 bis 3, wobei die Schiebebühnen (109, 110) entlang sowohl der rechten als auch der linken Seite der Übertragungsbahn angeordnet sind, wobei der erste Antrieb Antriebseinrichtungen (113) aufweist, die mit den Schiebebühnen (109, 110) derart verbunden sind, daß sich die Schiebebühnen (109, 110) zusammen in der gleichen Richtung bewegen können, und wobei der zweite Antrieb Antriebseinrichtungen (114) aufweist, die mit den Armen (111a, 111b; 112a, 112b) derart verbunden sind, daß ein jeder der beiden Arme (111a, 112b) und ein jeder der beiden Arme (111a, 112b), die jeweils an einem Ende und am anderen Ende einer jeden der Schiebebühnen (109, 110) angeordnet sind, veranlaßt werden kann, in der gleichen Richtung zu schwenken und jeweils die gleiche Stellung anzunehmen.

7. System nach Anspruch 6, wobei die zweite Antriebseinrichtung (114) eine drehbare Welle (109, 110), die in eine jede der Schiebebühnen (109, 110) eingearbeitet ist, ein Drahtseil (132) mit Enden, die an die drehbaren Wellen (109, 110) befestigt sind, und einen Zwischenabschnitt, der um Führungszugkraftübertragungseinrichtungen (131a, 131b) geführt ist, einen Motor (129), der den Führungszugkraftübertragungseinrichtungen (131a, 131b) derart zugeordnet ist, daß die Stellung der Führungszugkraftübertragungseinrichtungen (131a, 131b) verändert wird, und Führungsräder (133a bis 133d, 134a bis 134d) aufweist, die derart angeordnet sind, daß das Drahtseil (132) unabhängig von der Ausdehnung der Schiebebühnen (109, 110) straff gedehnt wird, wobei die Arme (111a, 111b, 112a, 112b) veranlaßt werden, in der gleichen Richtung in Richtung ihrer aufrechten Ruhestellung oder ihrer abgesenkten aktiven Stellung zu schwenken, wenn die Stellung der Führungszugkraftübertragungseinrichtungen (131a, 131b) derart verändert wird, daß das Drahtseil gezogen wird.

8. System nach Anspruch 6, wobei beide Schiebebühnen (109, 110) so angeordnet sind, daß der Zwischenraum zwischen den beiden Schiebebühnen (109, 110) anpaßbar ist.

9. System nach einem der Ansprüche 1 bis 3, wobei die Schiebebühne (204) entlang einer Seite der Übertragungsbahn angeordnet ist, wobei eine Seitenführung (302) für das übertragene Frachtgut entlang der anderen Seite der Übertragungsbahn angeordnet ist und in einer Längsrichtung entgegengesetzte Enden aufweist, wobei eine dritte Antriebseinrichtung (320a, 320b, 321) für ein Hin- und Herbewegen der Seitenführung (302) für Frachtgut entlang der Übertragungsbahn zwischen einer zurückgezogenen Stellung an der Seite des Bettes (7) und einer ausgedehnten Stellung zu und in die Regale (6) vorgesehen ist, wobei die Seitenführung (302) für Frachtgut mit der Schiebebühne (204) derart verbunden ist, daß sie sich zusammen mit der Schiebebühne (204) in der gleichen Richtung bewegt.

10. System nach Anspruch 9, wobei die Schiebebühne (204) und die Seitenführung (302) für Frachtgüter derart angeordnet sind, daß der Zwischenraum zwischen der Schiebebühne (204) und der Seitenführung (302) anpaßbar ist.

11. System nach einem der Ansprüche 9 oder 10, wobei die dritte Antriebseinrichtung parallele Verbindungen (320a, 320b), die an den entgegengesetzten Enden der Seitenführung (302) angelenkt sind und eine aufrechte Stellung und eine abgesenkte Stellung aufweisen, und einen Antrieb (321) zum Drehen der Verbindungen (320a, 320b) zwischen der aufrechten und der abgesenkten Stellung aufweist.

12. System nach einem der Ansprüche 1 bis 3, wobei die zweite Antriebseinrichtung (12) eine drehbare Welle (15), die in die Schiebebühne (9) eingearbeitet ist, eine Seilenden-Halteeinrichtung (18), die an die drehbare Welle (15) befestigt ist, einen Antriebsrotor (21), der an der Seite des Bettes (7) vorgesehen ist, ein Drahtseil (23), das durch die Seilenden-Halteeinrichtung (18) und den Antriebsrotor (21) tritt und zwischen diesen gedehnt ist, und Führungsräder (24a bis 24d) aufweist, die derart angeordnet sind, daß das Drahtseil (23) unabhängig von der Ausdehnung der Schiebebühne (9) straff gedehnt wird.

13. System nach Anspruch 12, wobei die zweite Antriebseinrichtung (12) ferner Federn (19a, 19b) zum Zwingen eines jeden Übertragungsarmes (10a, 10b) in Richtung seiner aufrechten Ruhestellung aufweist, wobei die Arme (10a, 10b) veranlaßt werden, in Richtung ihrer abgesenkten aktiven Stellung zu schwenken, wenn das Drahtseil (23) mit der Drehung des Antriebsrotors (21) gezogen wird.

14. System nach Anspruch 12, wobei das Drahtseil (23) ein erstes Seil (23a) zum Veranlassen der Arme (10a, 10b), in Richtung ihrer abgesenkten, aktiven Stellung zu dem Zeitpunkt der Drehung des Antriebsmotors (21) in der einen Winkelrichtung zu schwenken, und ein zweites Seil (23b) aufweist, zum Veranlassen der Arme (10a, 10b), in Richtung ihrer aufrechten Ruhestellung zu dem Zeitpunkt zu schwenken, da sich der Antriebsrotor (21) in der entgegengesetzten Winkelrichtung dreht.

15. System nach einem der Ansprüche 1 bis 3, wobei die erste Antriebseinrichtung (206) eine Zwischenschiene (211, 212), die indirekt an der Seite des Bettes (203) derart gelagert ist, daß sie sich entlang der Übertragungsbahn bewegen kann und derart gestaltet ist, daß sie die Schiebebühne (204, 205) lagert, die sich entlang der Übertragungsbahn bewegen kann, einen ersten Antrieb (213) zum Bewegen der Zwischenschiene (211) zu und von den Regalen (6), einen zweiten Antrieb (214) zum Bewegen der Schiebebühne (204, 205) in der gleichen Richtung, der Bewegung der Zwischenschiene (211) zugeordnet, aufweist, wobei die zweite Antriebseinrichtung (209) ein angetriebenes Element (228), das indirekt an der Seite des Bettes (203) derart gelagert ist, daß es sich entlang der Übertragungsbahn bewegen kann, einen nach vorne und zurück drehbaren Hebel (230), der an der Schiebebühne (204, 205) angelenkt ist, ein inneres Getriebe (231) zum Verändern der Drehbewegung des Hebels (230) in eine Schwenkbewegung der Arme (207a, 207b), ein Übertragungskabel (233), das mit entgegengesetzten Enden (232a, 232b) zwischen dem getriebenen Element (228) und dem Hebel (230) verbunden ist und zwischen diesen gedehnt ist, und einen Antriebsmechanismus (234) zum Hin- und Herbewegen des getriebenen Elements (228) aufweist.

16. System nach einem der Ansprüche 1 bis 3, wobei ein Raum D zwischen zwei benachbarten Bereichen zum Lagern des Frachtgutes in einem jeden der Regale (6) ausgebildet ist, so daß die Schiebebühne (9) mit den Übertragungsarmen (10a, 10b) in die Regale (6) eintreten kann.

17. System nach Anspruch 16, wobei ein Trennelement (5) zwischen benachbarten Bereichen zum Lagern des Frachtgutes in jedem der Regale (6) derart vorgesehen ist, daß der Raum D für einen Eintritt der Schiebebühne (9) mit den Übertragungsarmen (10a, 10b) in die Regale (6) sichergestellt wird.

## Revendications

1. Système de transfert de marchandises afin de transférer des marchandises entre des tablettes de rayonnage (6) et un engin de manutention (1),
ledit engin de manutention (1) pouvant se déplacer horizontalement le long des tablettes de rayonnage (6) à un certain niveau et un banc rigide (7) pour recevoir une marchandise transférée sur un trajet de transfert horizontal qui s'étend entre le banc (7) et les tablettes de rayonnage (6) dans une direction perpendiculaire au sens de déplacement de l'engin de manutention (1), le trajet de transfert ayant un côté droit et un côté gauche, et le banc (7) présentant des extrémités opposées en regard des tablettes (6),
le système comprenant :
- un transbordeur (9) qui est disposé le long d'au moins un côté du trajet de transfert, ayant des extrémités opposées dans le sens longitudinal, et ayant une position rétractée au côté du banc (7) et étant expansible depuis sa position rétractée jusqu'à sa position de marche en avant à l'intérieur des tablettes (6),
- une première commande (11) pour animer d'un mouvement de va et vient le transbordeur (9) le long de rails de guidage (13, 14) prévues au côté du trajet de transfert,
- une paire de bras de transfert (10a, 10b) pour pousser une face latérale de la marchandise à partir de l'arrière par rapport au sens du transfert pour la rapprocher du banc (7) et l'en éloigner, les bras de transfert pivotant chacun sur les extrémités opposées du transbordeur (9) et ayant une extrémité libre passant entre une position verticale de repos et une position abaissée active dans laquelle l'extrémité libre est en saillie sur le trajet de transfert, et
- une seconde commande pour faire passer les extrémités libres des bras de transfert (10a, 10b) entre leurs positions de repos et actives.

2. Système selon la revendication 1, dans lequel la seconde commande (12) est interconnectée avec les deux bras de transfert (10a, 10b) de sorte que les deux bras de transfert (10a, 10b) peuvent basculer ensemble dans le même sens et prendre la même position.

3. Système selon la revendication 1, dans lequel la seconde commande (12) est interconnectée avec les deux bras de transfert (10a, 10b) de sorte que les bras de transfert (10a, 10b) peuvent basculer dans des sens opposés l'un par rapport à l'autre et prendre des positions différentes l'une de l'autre.

4. Système selon l'une quelconque des revendications 1 à 3, dans lequel la seconde commande (12) est destinée à basculer chacun des bras de transfert à un angle supérieur à 90°, et l'extrémité libre de chaque bras de transfert est inclinée vers le bas par rapport à un plan horizontal lors du passage à la position abaissée active.

5. Système selon l'une quelconque des revendications 1 à 3, dans lequel la seconde commande (12) comprend des ressorts (19a, 19b) pour solliciter chaque bras de transfert (10a, 10b) vers sa position verticale de repos, de sorte que les bras de transfert (10a, 10b) sont amenés à basculer jusqu'à leur position abaissée active à l'encontre de la sollicitation des ressorts (19a, 19b).

6. Système selon l'une quelconque des revendications 1 à 3, dans lequel Les transbordeurs (109, 110) sont disposés le long des deux côtés droit et gauche du trajet de transfert, la première commande comprenant des moyens d'entraînement (113) qui sont interconnectés avec les transbordeurs (109, 110) de sorte que les transbordeurs (109, 110) peuvent se déplacer ensemble dans le même sens, et la seconde commande comprend des moyens d'entraînement (114) qui sont interconnectés avec les bras (111a, 111b ; 112a, 112b) de sorte que chacun des deux bras (111a, 112b) et chacun des deux bras (11a, 1112b), situé respectivement sur une extrémité et sur l'autre extrémité de chacun des transbordeurs (109, 110) peuvent être amenés à basculer dans le même sens et à prendre la position, respectivement.

7. Système selon la revendication 6, dans lequel le second moyen d'entraînement (114) comprend un arbre rotatif (109, 110) incorporé dans chacun des transbordeurs (109, 110), un câble (132) ayant des extrémités fixées aux arbres rotatifs (109, 110) et ayant une portion intermédiaire passant autour de poulies de guidage (131a, 131b), un moteur (129) associé aux poulies de guidage (131a, 131b) de manière à changer les positions des poulies de guidage (131a, 131b), et des roues de guidage (133a à 133b, 134a à 134d) disposées de façon que le câble (132) soit tendu quelle que soit l'extension des transbordeurs (109, 110), dans lequel les bras (111a, 111b, 112a, 1112b) sont amenés à basculer dans le même sens vers leur position verticale de repos ou vers leur position abaissée active lorsque la position des poulies de guidage (131a, 131b) est changée de sorte qu'il y a traction du câble.

8. Système selon la revendication 6, dans lequel les deux transbordeurs (109, 110) sont agencés de façon que l'intervalle entre les deux transbordeurs (109, 110) soit réglable.

9. Système selon l'une quelconque des revendications 1 à 3, dans lequel le transbordeur (204) est disposé le long d'un côté du trajet de transfert, un guide latéral (302) pour la marchandise transférée étant disposé le long de l'autre côté du trajet de transfert et ayant des extrémités opposées dans le sens longitudinal, un troisième moyen d'entraînement (320a, 320b, 321) étant prévu pour animer d'un mouvement de va et vient le guide latéral (302) pour la marchandise le long du trajet de transfert entre une position rétractée au côté du banc (7) et une position étendue vers et jusque dans les tablettes (6), le guide latéral (302) pour la marchandise est interconnecté avec le transbordeur (204) de manière à se déplacer avec le transbordeur (204) dans le même sens.

10. Système selon la revendication 9, dans lequel le transbordeur (204) et le guide latéral (302) pour des marchandises sont agencés de façon que l'intervalle entre le transbordeur (204) et le guide latéral (302) soit réglable.

11. Système selon la revendication 9 ou 10, dans lequel le troisième moyen d'entraînement comprend des biellettes parallèles (320a, 320b) pivotant sur les extrémités opposées du guide latéral (302) et ayant une position verticale et une position abaissée, et un organe d'entraînement (321) pour faire basculer les biellettes (320a, 320b) entre les positions verticales et abaissées.

12. Système selon l'une quelconque des revendications 1 à 3, dans lequel le second moyen d'entraînement (12) comprend un arbre rotatif (15) incorporé dans le transbordeur (9), un câble et un organe de retenue (18) fixé à l'arbre rotatif (15), un rotor d'entraînement (21) fourni sur le côté du banc (7), un câble (23) passant à travers et étendu entre l'organe de retenue (18) du côté câble et le rotor d'entraînement (21), et des roues de guidage (24a, 24d) disposées de façon que le câble (23) soit tendu quelle que soit l'extension du transbordeur (9).

13. Système selon la revendication 12, dans lequel le second moyen d'entraînement (12) comprend en outre des ressorts (19a, 19b) pour solliciter chaque bras de transfert (10a, 10b) vers sa position verticale de repos, dans lequel les bras (10a, 10b) sont amenés à basculer vers leur position abaissée active lorsque le câble (23) est tiré par la rotation du moteur d'entraînement (21).

14. Système selon la revendication 12, dans lequel le câble (23) comprend un premier câble (23a) pour amener les bras (10a, 10b) à basculer vers leur position abaissée active au moment de la rotation du moteur d'entraînement (21) dans une direction angulaire, et un second câble (23b) pour amener les bras (10a, 10b) à basculer vers leur position verticale de repos au moment de la rotation du moteur d'entraînement (21) dans la direction angulaire opposée.

15. Système selon l'une quelconque des revendications 1 à 3, dans lequel le premier moyen d'entraînement (206) comprend un rail intermédiaire (211, 212) qui est supporté indirectement sur le côté du banc (203) pouvant se déplacer suivant le trajet de transfert et est destiné à supporter le transbordeur (204, 205) pouvant se déplacer le long du trajet de transfert, un premier organe d'entraînement (213) pour déplacer le rail intermédiaire (211) vers et à partir des tablettes (6), un second organe d'entraînement (214) pour déplacer le transbordeur (204, 205) dans la même direction en association avec le mouvement du rail intermédiaire (211), dans lequel le second moyen d'entraînement (209) comprend un organe mené (228) supporté indirectement sur le côté du banc (203) pouvant se déplacer le long du trajet de transfert, un levier pouvant basculer vers l'avant et vers l'arrière (230) qui pivote sur le transbordeur (204, 205), une transmission interne (231) pour changer le mouvement de basculement du levier (230) en un mouvement oscillant des bras (207a, 207b), un câble de transmission (233) connecté et étendu par ses extrémités opposées (232a, 232b) entre l'organe mené (228) et le levier (230), et un mécanisme d'entraînement (234) pour animer d'un mouvement de va et vient l'organe mené (228).

16. Système selon l'une quelconque des revendications 1 à 3, dans lequel un espace D est formé entre deux sections adjacentes pour stocker les marchandises dans chacune des tablettes (6) de sorte que le transbordeur (9) avec les bras de transfert (10a, 10b) peut entrer dans les tablettes (6).

17. Système selon la revendication 16, dans lequel un organe de séparation (5) est prévu entre deux sections adjacentes pour stocker les marchandises dans chacune des tablettes (6) de façon à assurer l'espace D pour l'entrée du transbordeur (9) avec les bras de transfert (10a, 10b) dans les tablettes (6).
